# EUROPEAN PATENT SPECIFICATION

(11) **EP 3 967 151 B1**
(45) Date of publication and mention of the grant of the patent: **19.03.2025**
(21) Application number: 20305802.9
(22) Date of filing: 14.07.2020
(51) Int. Cl.: A23J 1/04, A23J 3/34

(54) **VALORISATION OF MARINE ANIMAL BY-PRODUCTS**
VALORISIERUNG DER NEBENPRODUKTE VON MEERESTIEREN
VALORISATION DE SOUS-PRODUITS D'ANIMAUX MARINS

(43) Date of publication of application: 16.03.2022
(73) Proprietor: Goia Limited, Port-Louis (MU)
(72) Inventor: DELANNOY, Charles, 62930 Wimereux (FR); COQUELLE, Mathilde, 62930 Wimereux (FR); BOUQUET, Peggy, 35650 Le Rheu (FR)
(74) Representative: Grünecker Patent- und Rechtsanwälte PartG mbB

(56) References cited:
- WO-A1-2013/054363
- WO-A1-2014/068601
- WO-A1-2014/207497
- WO-A2-2017/119820
- ES-A1- 2 298 071
- US-B1- 7 070 953
- SYLVIE RICARD-BLUM ET AL: "Matricryptins and matrikines: biologically active fragments of the extracellular matrix", EXPERIMENTAL DERMATOLOGY, vol. 23, no. 7, 16 July 2014 (2014-07-16), pages 457 - 463, XP055179386, ISSN: 0906-6705, DOI: 10.1111/exd.12435
- SCHMIDT M M ET AL: "Collagen extraction process", INTERNATIONAL FOOD RESEARCH JOURNAL,, vol. 23, no. 3, 1 January 2016 (2016-01-01), pages 913 - 922, XP002784245

## Description

### Field of the Invention

The present invention relates to methods and processes for extracting nutritional and cosmetic products from marine animal by-products.

### Introduction

Large amounts of waste and by-products, which are suitable for further use, are generated in the food production chain. These animal by-products (ABP) are defined as animal carcasses, parts of carcasses and other products of animal origin that are not intended for human consumption. This includes both cooked and uncooked fish, shellfish and other fishery products not for human consumption. Animal by-products can pose a threat to animal and human health if not properly handled or disposed of. Animal by-products are a significant fraction of the biological waste steam, and there are stringent regulations governing the disposal of these wastes.

Therefore strict standards exist in the EU that control the collection, transportation, storage, handling, processing and use or disposal of all animal by-products (EU Regulation 1069/2009).

Although the infrastructure of the waste industry and associated disposal costs in the western world vary from country to country, the option to landfill ABPs has become less viable in many countries. In some cases landfilling of ABP is even prohibited, and in others there is an increased cost via the introduction of taxes or, as in the UK, possible fines for exceeding allocated capacities. A number of technologies exist for the treatment of ABP, including rendering and incineration, as well as composting and biogas production for certain categories of ABP. One technology of recycling ABP is in-vessel composting, that has the benefit of producing a safe and valuable compost for use as a soil conditioner and fertilizer whilst avoiding the need for landfill. Industrial scale production of fish protein meal as animal feed is a possibility to valorize marine ABP (WO 2005/115176). However, all these methods leave valuable biological resources of the ABP unexploited. Furthermore, in particular for marine ABP the residual salt content and other unwanted impurities of these low level products that these methods produce remain a problem.

Collagen is the main component of connective tissue, the most abundant fiber form protein in vertebrates, and constitutes about 30% of vertebrate total proteins. Collagen has a wide range of applications in leather, the film industry, pharmaceutical, cosmetic and biomedical materials, and food. Collagen has been widely used in tissue engineering biomaterials in the last two decades, due to its mimicking properties of human protein, which can be used in the treatment of hypertension, urinary incontinence and pain associated with osteoarthritis, use in tissue engineering for implants in humans, and inhibition of angiogenic diseases, such as diabetes complications, obesity, and arthritis.

About 30% of fish wastes consist of skin and bone, which are very rich in collagen. Annually, over 100 million tons of fish are harvested worldwide, and a third of the total catch is used for fishmeal and animal feed. Hence, the extraction of collagen from fish bone is a promising means to gain value-added product, and to lower environmental pollution.

EP1016347 relates to a process for preparing fish gelatin from the skins of fresh of defrosted raw fish by acid extraction. This process however is not suitable to process more complex ABP that contain fish bones, meat, cartilage and other fractions of ABP and only yields gelatin.

ES 2298071 A1 relates to enzymatic hydrolyzed collagen with a molecular weight between 1,000 and 50,000 Daltons and a procedure to obtain it. WO 2014/207497 A1 relates to a method to produce a marine protein hydrolysate with ultra-low heavy metal contamination and improved physical properties. WO 2014/068601 A1 to the use of natural antioxidants from marine algae extracts, such as seaweed extracts during enzymatic hydrolysis of aquatic protein from species such as fish, aquatic mammals, crustaceans and/or mollusks, to obtain high quality aquatic protein hydrolysates. Ricard-Blum, S. et al. (Exp. Dermatol. Vol. 23(7), 2014, p. 457-63) reviews matricryptins and matrikines as biologically active fragments of the extracellular matrix (e.g. from collagen). WO 2013/054363 A1 relates to a process for preparing low molecular weight peptides from fish gelatin. : Schmidt, M.M., et al. (Int. Food, Res. J., Vol. 23(3), 2016, p. 913-22) reviews collagen extraction processes with a particular focus on the extraction conditions and the conditions of hydrolysis. WO 2017/119820 A2 relates to the use of turbine mixing during enzymatic hydrolysis of aquatic protein from species such as fish, aquatic mammals, crustaceans and/or mollusks, to obtain high quality aquatic protein hydrolysates. US 7070953 B1 relates to protein hydrolysates produced with the use of COD proteases.

Small scale studies to extract collagen from fish byproducts have shown that these starting materials are a promising source of valuable collagen (Jeong, H.-S. et al. Biotechnology and Bioprocess Engineering 18: 1185-1191 (2013); Matmaroth, K. Food Chem. 112: 1179-1186 (2011); Schmidt, M.M. et al. Int. Food. Red. J. 23(3): 913-922 (2016)). However these laboratory small scale methods cannot be scaled-up in an economical way and require source material of lower complexity (skin) and do not make use of other valuable constituents of the starting products. Therefore, these methods have not matured to an industrial scale valorization of the usually complex marine ABP that contain skin, meat, fish bones, fins and cartilage. Hence, there remains a need for industrial methods that utilize marine ABP such as to prevent the need for landfilling or disposal of these products and which methods generate high quality raw products from marine ABP that can be used in the cosmetic industry. Further there remains a need for methods that can utilize complex ABP starting material and economically produce collagen and other products that are sufficiently pure for various further applications.

It is one object of the present invention to provide large scale valorisation methods and processes that generate relatively high quality products for human and animal use starting from marine animal by-products. It is a particular object of the invention to provide high quality raw products, in particular collagen, for use in the cosmetic industry.

The present invention fulfils this need by providing methods that prevent the presence of unwanted, quality-degrading components in the resulting products that are derived from marine ABP. These methods are capable of handling complex starting material at large scale.

### Summary of the Invention

Products produced from marine by-products have an increasingly important role in providing nutrient rich feed ingredients for pig, poultry and aquaculture production but also in the growing pet food market where good quality, high value ingredients are used to manufacture pellets, pouches and treats. The freshness of the raw material is important as it effects the quality of the protein in the end product. Spoilage of fish and its products occur mainly due to enzyme and bacterial action and begins as soon as the fish perishes. The hydrolysed collagen and protein products produced by the prior art methods often contain a high level of monovalent ions and biogenic amines which in increased concentrations are toxic and give a bad taste and odour to the end-product and therefore are a problem. The present invention is based on the finding that the use of specific filtration steps in the process of manufacturing collagen hydrolysate and/or protein hydrolysate yield end products of very good quality, even when starting from lower quality starting material. The present invention achieves these goals by providing large-scale methods to valorise the industrial amounts of marine raw material as specified in the appended set of claims.

In a first aspect the present invention relates to a method of extracting collagen from marine animal by-products, the method comprising the steps of (a) providing marine animal by-product pieces, preferably of a size of less than 5 cm, more preferably a size of between 1 and 2 cm, wherein the by-product pieces comprise at least two components selected from flesh, skin, fish bones, fins and cartilage of the marine animal, (b) separating the animal by-product pieces into at least two fractions comprising a protein-rich fraction and a fraction comprising skin and cartilage, wherein the skin and cartilage fraction is essentially free of flesh, (c) optionally, grinding the fraction comprising skin and cartilage, preferably to a resulting particle size of between 0,5 mm and 1 cm more preferably between 1 mm and 4 mm, (d) enzymatically hydrolyzing the fraction comprising skin and cartilage to produce a collagen raw hydrolysate, preferably the hydrolysis is carried out at a pH of between 5 and 9, more preferable a pH of between 6 and 8 (e) separate the collagen raw hydrolysate into a lipid fraction, an aqueous collagen hydrolysate fraction without solids and a fraction with solids, preferably the separation is done by three phase decanter centrifugation, (f) subjecting the aqueous collagen hydrolysate fraction to at least one filtration step, using a membrane with a pore size of 2000 - 100.000 Da, preferably 4000 to 50.000 Da, more preferably about 10.000 Da, to produce a first permeate containing collagen hydrolysate and a retentate, and (g) demineralizing the first permeate by nanofiltration and/or dialysis using a membrane with a pore size of less than 1000 Da, preferably between about 150-300 Da to produce purified collagen solution. The invention further relates to a method as recited above, the method further comprising deodorizing the purified collagen solution of step (g), preferably the deodorizing is performed using activated carbon and/or dialysis. The invention further relates to a method as recited above, further comprising concentrating and sterilizing the purified collagen solution or the deodorized purified collagen solution, preferably the concentration and sterilization is performed by evaporation such as direct steam injection. The invention further relates to a method as recited above, further comprising drying the purified collagen solution or the purified deodorized collagen solution, or the concentrates thereof, to produce collagen powder, preferably the drying is performed by spray drying, freeze drying, lyophilizing, nozzle atomizer, most preferably the drying is performed by continuous horizontal spray drying.

In another embodiment the present invention relates to a method of producing protein hydrolysate from marine animal by-products, the method comprising the steps of: (a) providing marine animal by-product pieces, wherein the by-product pieces comprise at least two components selected from flesh, skin, fish bones, fins and cartilage of the marine animal, (b) separating the by-product pieces into at least two fractions comprising a protein-rich fraction and a fraction comprising skin and cartilage, (c) mixing the protein-rich fraction with water and separating a lipid fraction, an aqueous fraction and a protein-rich solid fraction, preferably the separation is done by three phase decanter centrifugation, (d) enzymatically hydrolyzing the protein-rich solid fraction to produce a protein hydrolysate solution, (e) separating the protein hydrolysate solution into a second lipid fraction, an aqueous protein hydrolysate fraction and a second solid fraction, preferably by three phase decanter centrifugation, and (f) collecting the aqueous protein hydrolysate. The invention further relates to a method as recited above, further comprising the step of (g) demineralizing the aqueous protein hydrolysate of step f) by filtration and/or dialysis using a membrane with a pore size of less than 1000 Da, preferably between 100 and 500 Da or 150 and 300Da. The invention further relates to a method as recited above, further comprising concentrating and sterilizing the aqueous protein hydrolysate or the demineralized aqueous protein hydrolysate, preferably the concentration and sterilization is performed by evaporation, such as direct steam injection. The invention further relates to a method as recited above, further comprising drying the aqueous protein hydrolysate, the demineralized aqueous protein hydrolysate or the respective concentrate thereof, to produce protein powder, preferably the drying is performed by spray drying, freeze drying, lyophilizing, nozzle atomizer, most preferably the drying is performed by continuous horizontal spray drying. The invention further relates to a method as recited above, further comprising the steps of (c') collecting the aqueous fraction of step (c) and subjecting it to filtration and/or dialysis using a membrane with a pore size of less than 1000 Da, preferably between 100 and 500 Da, (c") adding the retentate of step (c') to the protein-rich solid fraction prior to step (d).

The present invention further relates to an integrated process of up-cycling or valorizing marine animal by-products that combine the above recited methods. In on embodiment of this aspect, the integrated process comprises the steps of (a) providing marine animal by-product pieces, wherein the by-product pieces comprise at least two components selected from flesh, skin, fish bones, fins and cartilage of the marine animal, (b) separate the by-product pieces into at least two fractions comprising a protein-rich fraction and a fraction comprising skin and cartilage, wherein the skin and cartilage fraction is essentially free of flesh, (c1) subjecting the protein-rich fraction to steps (c) and subsequent steps of the method of producing protein hydrolysate of above, and (c2) subjecting the fraction comprising skin and cartilage to steps (c) and subsequent steps of the for method of extracting collagen as recited above. The further variations and refinements of the method of producing protein hydrolysate and the method of extracting collagen can be fully applied in the context of the integrated process of this aspect of the invention.

In any of the above described methods, the marine animal by-product used as starting material may be a by-product of fish, such as heads, viscera, fish bones, scraps and/or skin. In a preferred embodiment, the marine by-product is a by-product of tuna.

The above described methods produce collagen solutions and/or collagen powder. It has been found that the collagen produced by the above methods is of a very high quality. Accordingly, the present invention relates to a purified collagen solution or a collagen powder produced by the methods described in detail above as further specified in the appended claims. In an unclaimed aspect, the collagen solution and/or the collagen powder comprises at least one matrikine. The at least one matrikine of the collagen solution and/or powder may be any one or more of arresten, canstatin, tumstatin, tetrastatin, pentastatin 1, pentastatin 2, pentastatin 3, lamstatin, hexastatin 1, hexastatin 2, NC1 domain of collagen IV or XIX, endotropin, ectodomain of collagen XIII, XVII, XXIII or XXV, restin 1, restin 2, restin 3, restin 4, endostatin, neostatin 7, neostatin 14, palmitoyl pentapeptide-4, collagen hexapeptide GFOGER, and CLAC. In particular the invention relates to a collagen solution or powder produced by the inventive methods, wherein at least 50% of the peptides of the collagen hydrolysate or powder are < 2kDa, preferably at least about 60% of the peptides are < 2 kDa, more preferably at least about 65%, 66%, 67%, 68%, 69%, 70%, ... , 79%, 80%, 81%, 82, 83%, 84% or 85% of the peptides are < 2 kDa and wherein the residual salt content is less than 4% by dry weight, preferably less than 2%, 1% or 0,5% by dry weight.

The present invention also relates to a protein hydrolysate or protein powder produced by the methods of the invention as further specified in the appended claims. In one embodiment the protein hydrolysate or protein powder comprises at least 3% (wt) of omega 3 lipids and at least 1 % (wt) of phospholipids, preferably the hydrolysate or powder comprises at least 2% (wt) of monosaturated lipids, at least 3% (wt) of polysaturated lipids and at least 2,5% (wt) of omega 3 lipids. In particular, the purified protein hydrolysate or powder is characterized in that the residual salt content is less than 10%, or 5% by dry weight, the lipid content is less than 15%, 12% or 10% by dry weight and the protein content is more than 70%, 75% or 80% by dry weight.

The inventive collagen solution and collagen powder may be used for medical, nutritional and cosmetic purposes.

### Description of the Figures

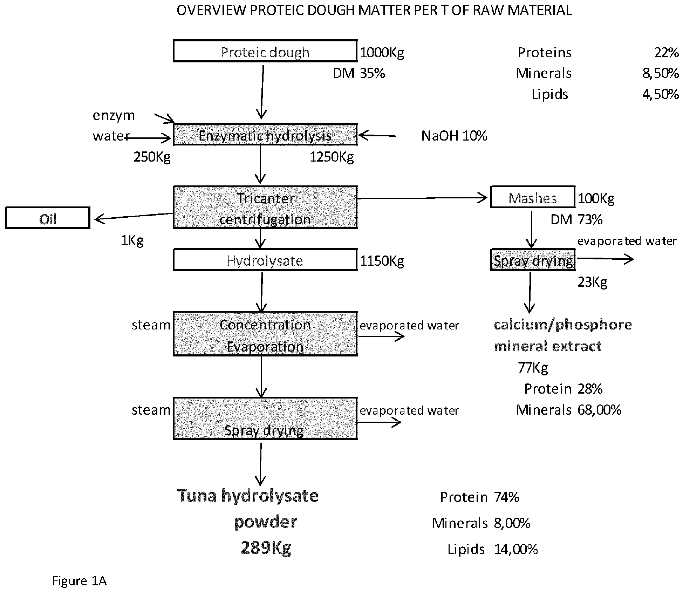

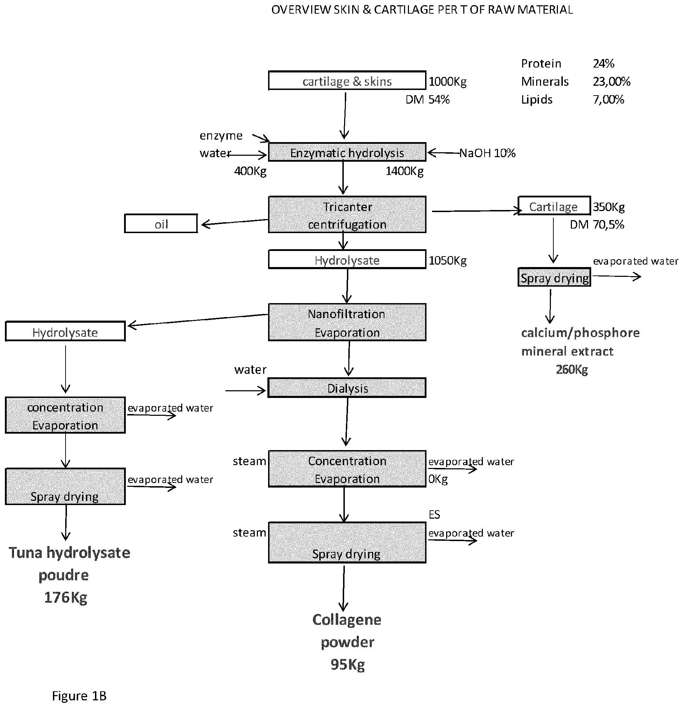

**Figure 1****:** Shows the balances of the protein fraction and cartilage fraction obtained from the raw material (tuna heads) from different batches of raw material.

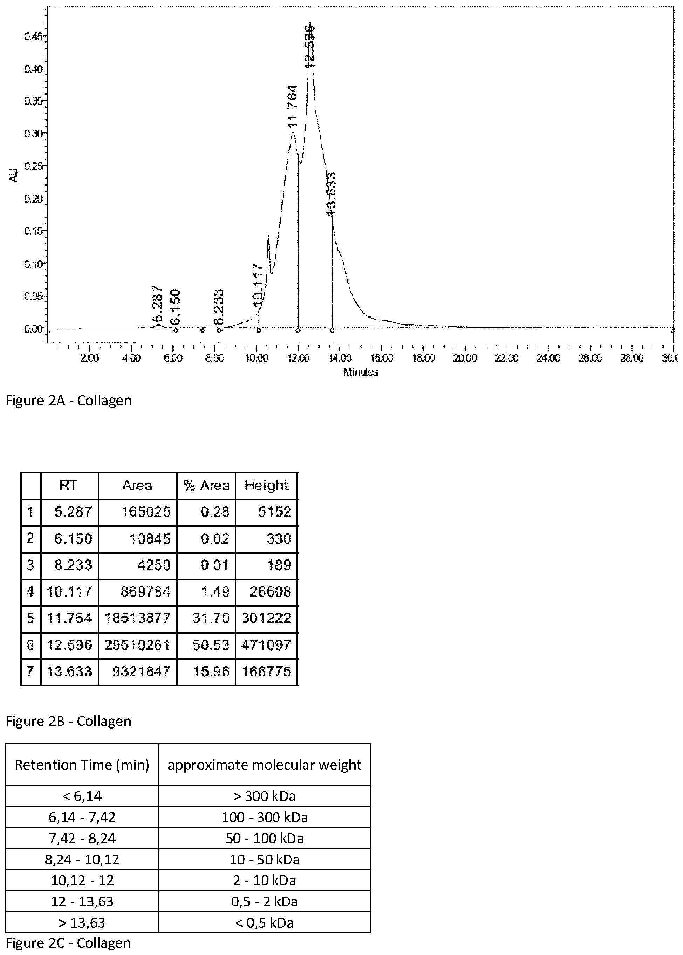

**Figures 2****: A:** Shows a HPLC analysis of collagen hydrolysate produced (batch 1), 214 nm spectrogram using a Biosep SEC 2000 gel filtration column (Phosphate buffer 0.1M + 0.5% SDS - Analysis flow = 1mL.min⁻¹). **B:** Peak analysis table. **C:** correspondence table between retention time and molecular weight

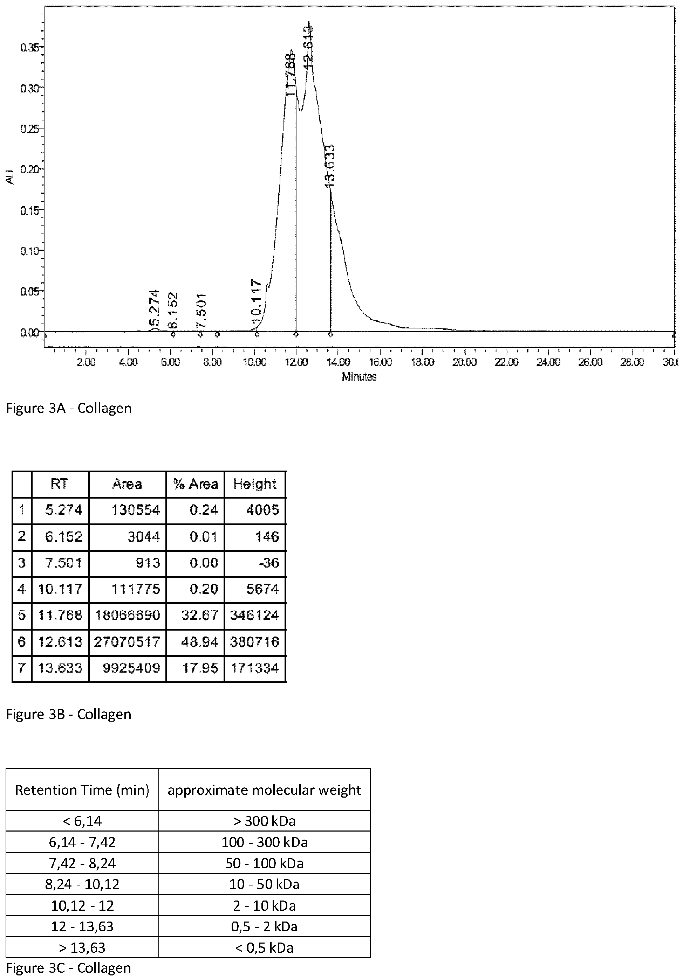

**Figures 3****: A:** Shows a HPLC analysis of collagen hydrolysate produced (batch 2), 214 nm spectrogram using a Biosep SEC 2000 gel filtration column (Phosphate buffer 0.1M + 0.5% SDS - Analysis flow = 1mL.min⁻¹). **B:** Peak analysis table. **C:** correspondence table between retention time and molecular weight.

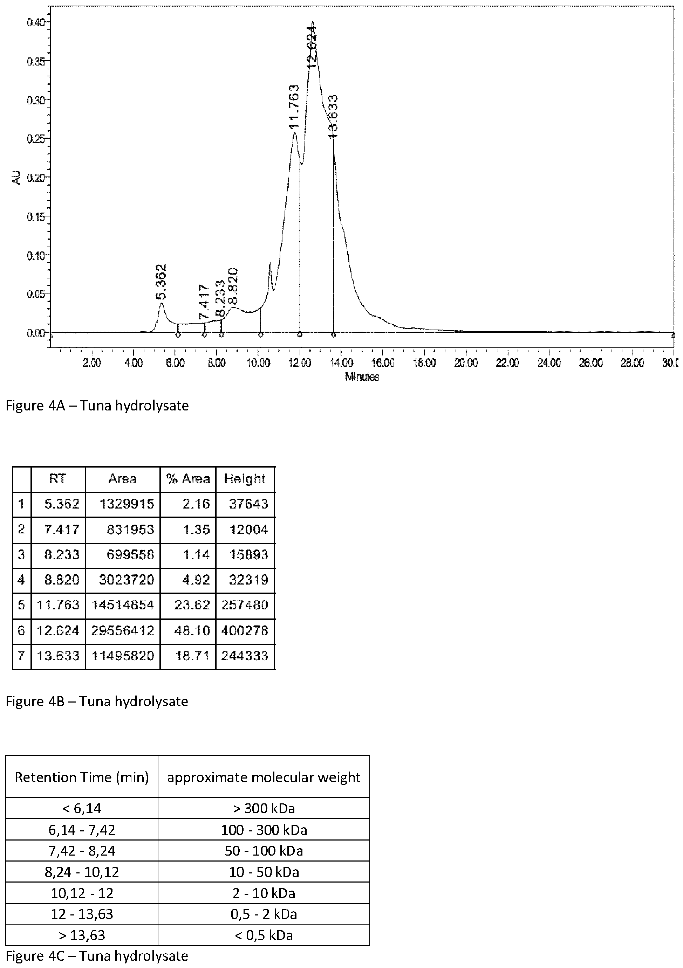

**Figures 4****: A:** Shows a HPLC analysis of protein hydrolysate (CPSP) produced (batch 2), 214 nm spectrogram using a Biosep SEC 2000 gel filtration column (Phosphate buffer 0.1M + 0.5% SDS - Analysis flow = 1mL.min⁻¹). **B:** Peak analysis table. **C:** correspondence table between retention time and molecular weight.

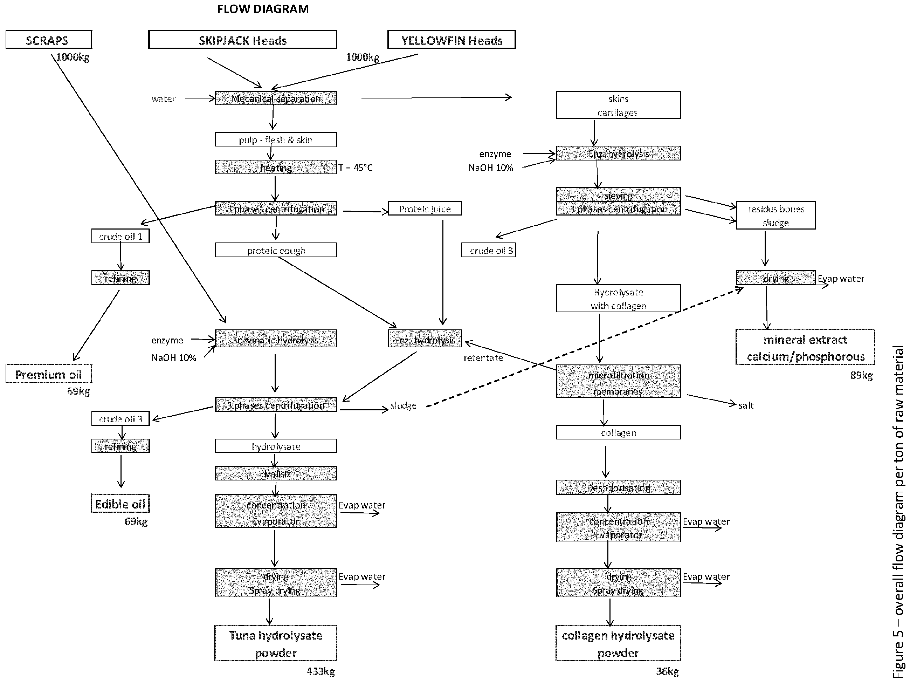

**Figure 5****:.** Shows a flow scheme of the integration of the processing of different by-products to produce protein hydrolysate and collagen hydrolysate.

### Detailed Description of the Invention

When reciting steps (a) ... (x) in the methods of the invention, the steps have to be performed in the order of occurrence. Preferably, the methods comprise no other procedural steps other than those explicitly specified. However, the different steps may be interrupted by non-procedural steps of transportation, cooling/heating and/or storage. Additional processing steps are, however, not excluded from the recited methods. The herein described methods are industrial methods, i.e. large scale methods. These methods operate with at least several hundreds of kilograms of starting material and can be operated to treat several tons of starting material. A skilled person will appreciate that this scale of operation requires the respective instrumentation and that the methods of the present invention not necessarily scale down to small-scale (laboratory scale) methods, and that, self-evidently, small scale methods cannot be simply scaled up to industrial scale [see. e.g. Crater & Lievense, FEMS Microbiol Lett. 2018 Jul; 365(13): fny138]. Very often, laboratory methods cannot be scaled up at all or cannot be scaled up in an economically meaningful way.

In a first aspect the present invention relates to a method for method of extracting collagen from marine animal by-products at industrial scale.

The term "marine animal by-product" relates to by-product in the form of heads, viscera, frames, skins and others such as tails, fins, scales, mince, blood, etc that arise from the processing of fish for human consumption. This material may constitute up to 70% of fish and shellfish after processing where fish fillet yield is species-dependent and is often in the range of 30 -50% of the fish. The waste generated after processing is actually valuable raw material from which fishmeal and fish oil may be produced from this raw material source and this material is still underutilised. The main source of the by-product is from finfish and white fish trimmings (pollock, cod, hake, haddock and others) as well as salmon (wild and from aquaculture), tuna, herring, mackerel and can come from wild caught fish or aquaculture processing. The quality of the raw material is often measured by the total volatile base nitrogen content which should be in the region of 50mgN/100g raw material. Preferred sources of marine animal by-product are from fish, in particular from tuna such as yellowfin (*Thunnus albacares*) or from Skip jack (*Katsuwonus pelamis*)*.*

The inventive method for extracting collagen comprises the steps of (a) providing marine animal by-product pieces, (b) separating the animal by-product pieces into at least two fractions comprising a protein-rich fraction and a fraction comprising skin and cartilage (c) optionally, grinding the fraction comprising skin and cartilage (d) enzymatically hydrolyzing the fraction comprising skin and cartilage to produce a collagen raw hydrolysate (e) separate the collagen raw hydrolysate into a lipid fraction, an aqueous collagen hydrolysate fraction without solids and a fraction with solids (f) subjecting the aqueous collagen hydrolysate fraction to at least one filtration step, using a membrane with a pore size of 2000 - 100.000 Da to produce a first permeate containing collagen hydrolysate and a retentate, and (g) demineralizing the first permeate by nanofiltration and/or dialysis using a membrane with a pore size of less than 1000 Da to produce purified collagen solution.

The by-product pieces in step (a) may have a size of less than 5 cm, more preferably a size of between 1 and 2 cm. The production of pieces of this size from the supplied raw material can be performed by known techniques, e.g. using industrial macerators or other means for shredding this material. Notably, the size of the pieces need not be precisely as indicated and the hashed or macerated material may exhibit pieces of variable size distribution. I.e. a size of less than X cm refers to the macerated raw material exhibiting pieces of no larger than 5 cm with a majority of pieces smaller than X. A size of between X and Y cm signifies that the average particle size should be within that range, but still larger and smaller pieces may be present.

The marine by-product and pieces produced therefrom will usually comprise at least two components selected from flesh, skin, fish bones, fins and cartilage of the marine animal. However, for the method of producing collagen it suffices that the material contains skin and/or fish bones and/or fins.

In the separating step (b) the separation can be performed with any suitable separator. Exemplary separators include separation equipment such as RSBF (models 04 or 04), RSTC Series, RSDD04, RSTD06, Beehive S02, SD and Beluga Series (models 208, 210, 310, 620, 820, 1830, 2050, 3060, 4100, 5100, 6100), SM and Barracuda Series (models 208, 210, 310, 620, 820, 1830, 2050, 3060, 4100, 5100, 6100, Modernpack Sepamatic (models 410, 1400, 1800, 2000, 3000, 4000) or a AM2C Barracuda Beluga 1830 separator. These separators can routinely be operated at parameters (pressure, grill/mesh size) to produce a skin and cartilage fraction is essentially free of flesh. Parameters like the porosity of the screen, the pressure applied on the screen and the flow rate of the raw material depend on the type of the separator used and are well described by the manufacturers.

A product that is "essentially free" of another component or is essentially free of other components in the sense of the present invention describes a product that contains less than 20% of the other component(s), preferably less than 15% or 10% and in particular less than 5, 4, 3, 2, or 1% of the other component(s). That is, a fraction that is essentially free of flesh comprises less than 20% of flesh, preferably less than 15% or 10% and in particular less than 5, 4, 3, 2, or 1% flesh. A protein-rich fraction, essentially free of bones and cartilage refers to a composition comprising less than 20% of bones and cartilages, preferably less than 15% or 10% and in particular less than 5, 4, 3, 2, or 1% bones and cartilages.

"Consisting essentially of" in the sense of the present invention describes a product that comprises more than 80%, preferably more than 85 or 90% and in particular over 95, 96, 97, 98 or 99% of the named component. It has to be understood that a protein-rich fraction, essentially free of bones and cartilages may be a fraction consisting essentially of flesh.

Thus in step (b) the separator is operated at parameters according to the manufacturers specification two fractions are obtained, a protein rich fraction (that can be further used as described herein below) and a fraction essentially only comprises components such as skin, cartilage, fish bones, fins, etc. that contain collagen. This separation step is important to the present invention, since the quality of the collagen product produced is improved when the fraction containing skin and cartilage comprises essentially no flesh. Furthermore, an additional washing step of the skin and cartilage containing fraction (with associated loss of material) can be avoided.

In an optional step (c) of the inventive method the particle size of the fraction of skin and cartilage may be further reduced to a resulting particle size of between 0,5 mm and 1 cm, preferably between about 1 mm and about 5 mm, or between about 1 mm and about 4 or 3 mm. As indicated above in relation to step (a), a size of between X and Y mm signifies that the average particle size should be within that range, but still larger and smaller pieces may be present. The advantage of further reducing the size of the particles of cartilage and skin is that the subsequent hydrolysis step (d) requires less time to be completed and also improves the yield of collagen hydrolysate.

The step (d) of enzymatically hydrolyzing the (optionally ground) fraction comprising skin and cartilage produces a collagen raw hydrolysate. The raw hydrolysate contains hydrolyzed collagen, lipids as well other organic material and ash (solids). The enzymes used in this step are proteases, that can be used alone or in mixtures. Essentially, the protease used has a cleavage motif that occurs in the amino acid sequence of collagen (of type I, II, III, IV and/or V) such as to cleave the collagen into smaller peptides such as is the case for e.g. bacterial alkaline proteases. Preferred classes of enzymes are serine endo-peptidases, exopeptidases, di- and tri- peptidases and carboxypeptidase, as well as metalloproteases.

The source of the protease is not important, vegetal proteases may be used as well as bacterial proteases or proteases from animal sources. Suitable enzymes include, but are not limited to Papaine vegetal protease, Bromelaine vegetal protease, Protease plus (Dupont/Dyadic), Sumizyme BNP L, Sumizyme LP, Sumizyme FLG (Shin Nihon), Alcalase 2.4 and 2.5 L, Neutrase, Protamex, Esperase, Savinase (Novozymes), Corolase 7089 (AB enzyme), papain, bromelain, Promod 950L (Biocatalysts).

Usually, the hydrolysis is carried out at a pH of between 5 and 10, more preferably at a pH of between 6 and 9 or between 6 and 8. However, each enzyme has its own pH range in which it may be operated. Thus, the conditions of the enzymatic hydrolysis follow the recommendations of the supplier of the enzyme. Exemplarily, Protease PLUS (Dyadic) is a bacterial alkaline protease produced by the controlled fermentation of Bacillus licheniformis. It is an endopeptidase capable of hydrolyzing the interior peptide bonds of protein molecules with a broad substrate specificity; this enzyme has an pH stability between 6.0 and 10.0, it is operable in an effective pH range of pH 7.0 to 10.0 and has an optimum pH range of pH 9.0 to 10.0. Papain has an optimal pH for activity of 6.0-7.0. That is, if in step (d) Protease Plus is used the process is operated at a pH of between 9 and 10, if Papain is used the step is operated at a pH of between 6 and 7.

The temperature of the enzymatic hydrolysis, as the pH condition, depend on the enzyme or enzyme mixture that is used. Usually, the temperature will be from about 50°C to about 70°C, preferably up to about 65°C. Exemplarily, Protease Plus has a temperature stability of up to 70°C, an effective temperature range up to 65°C and an optimum activity at 60°C. Papain has a temperature optimum for activity of 65 °C.

The exact amount of enzyme added depends on the process and the protein substrate concentration, degree of desired protein hydrolysis, pH, temperature and time. The dosage is calculated as % per weight of protein to be hydrolyzed. Typical dosage levels are 0.2% to 2%, or 0.3% to 1% by kg of protein contained in the material to be treated. The dosage naturally depends on the type of the enzyme (mixture) used and can be adjusted accordingly to meet economic considerations (e.g. to increase the amount of enzyme to reduce processing time, or to reduce the amount of enzyme when processing time is not an issue). Exemplarily, for Promod 950 L (Biocatalyst) the amount of enzyme to be added to the skin and cartilage containing fraction is from about 0.3% to about 0.7%, preferably between about 0.4% and 0.6% or about 0.5% -+ 0.05%. The skilled person can easily control and adjust the parameters of the hydrolysis step depending on the protease (mixture) used and/or the nature of the starting material. If hydrolysis is proceeding too slow enzyme may be supplemented as required.

The duration of the enzymatic hydrolysis depends on the activity and amount of enzyme used. As maintaining a given temperature for the hydrolysis requires a significant amount of energy, hydrolysis times are chosen to not exceed 10 hours. To achieve a good extraction, the hydrolysis times should also not be shorter than about 1 hour. Generally, as indicated above, the provision of smaller particles for the skin and cartilage fraction allows for shorter hydrolysis times. For example, if Protease PLUS is used for well macerated material the hydrolysis is performed within about 3 to 4 hours, if Promod 950 L (Biocatalyst) is used the hydrolysis time is about 5 hours.

Thus, hydrolysis times range between 1 hour and 10 hours, preferably between 2 hours and 8 hours, more preferably between 3 hours and 6 hours or any value between these times.

To control the efficiency and advancement of the hydrolysis the solubility of the protein can be measured with a refractometer (brix). Additionally, the rate of hydrolysis can be determined with analytical methods (such as the Sorensen method and also the pH stat method (Eric Rothenbuhler & John E. Kinsella; J. Agric. Food Chem. 1985, 33, 3, 433-438). Other methods of controlling, determining protein hydrolysis are known to the skilled person (see review of Silvestre, Food Chemistry, Volume 60, Issue 2, October 1997, Pages 263-271). These methods allow to control the cutting of the amino acids which influence the pH and allow the adjustment of the pH with NaOH or acid as needed to operate the hydrolysis at the optimum pH.

The enzymatic hydrolysis yields a liquid phase enriched in peptides from the collagen hydrolysis, a lipid phase and a solid phase. These phases are separated in step (e) of the inventive methods. Any suitable technique or combination of techniques may be used for separating a lipid phase, an aqueous phase and a solid phase. In a preferred embodiment the separation is performed in a decanter such as a three phases decanter. There are many suitable (three phase) decanters available from different suppliers, exemplary machines include but are not limited to, Flottweg Z-series (e.g. Z3E, Z5E, Z6E, Z4 or Z35), three phase decanters from GEA (e.g. ACE 345 or Alfa Laval). The main parameters such as temperature, rotation speed (acceleration > 3500g), flow, adjustment of the extraction pipe (no value), type of the screw (angle, D/L of the bowl) are operated depending on the instrument used and according to operating procedures as suggested by the manufacturer of the instrument.

The separation step (e) yields three fractions, (i) one lipid fraction (fish oil) that is collected and can be used for various purposes, (ii) a solid fraction (mineral fraction, ash, can be ground and dried to a white powder) that can be used as a source of minerals for nutraceutical markets, and (iii) the aqueous phase containing hydrolysed collagen.

The aqueous fraction is subjected to at least one filtration step (f), using a membrane with a pore size of 2000 - 100.000 Da, preferably 4000 to 50.000 Da to produce a first permeate containing collagen hydrolysate and a retentate. Particularly preferred pore size ranges are between 5000 Da and 25.000 Da, or between 6000 Da and 15.000 Da. In particular the membrane may have a pore size of 7000 to 12.000 Da, such as 10.000 Da (10 kDa). The pore size of this ultrafiltration step allows to filter the collagen hydrolysate for large proteins that have not undergone hydrolysation as well as remaining fat and lipid vesicles. The fraction containing hydrolyzed collagen (collagen peptides) is the permeate.

The filtration can be performed by tangential flow filtration of cross flow filtration. The nature of the membrane is not essential and can be cellulose based, from polymeric material or ceramic. Exemplary membranes may be of polyethersulfone (PES), cellulose acetate, polyacrylonitrile, polyvinylfluoride and other fluorinated polymeric membranes and ceramic filters made from zirconium oxide or titanium oxide.

Exemplary membranes that can be used include but are not limited to membranes supplied by GE, KOCH, SYNDER, TIA, PALL, TAMI, MICRODYN NADIR (NADIR, SPIRA-CEL (spiral wound modules), SEPRODYN (modules for fine filtration) MICRODYN (tubular and capillary modules) ULTRADYN (hollow fiber modules for ultrafiltration).

Suitable instrumentation include Alfa Laval Pilot Unit Multi, and a Ultrafiltration pilot with 1x 5 m² Organique UF and OI supplied by TIA with a capacity of 200 to 500 I/h of permeate.

Exemplarily a 10 kDa ultrafiltration using a Kock HKF 131 UF can be used for the cartilage hydrolysate to produce collagen and remove large molecular weight impurities: the retentate fraction containing large proteins and fat residues is collected and can be recycled with other protein hydrolysates (scraps, protein dough, charged water). Collagen hydrolysate is found in the permeate, which is a clear slightly colored (yellowish to brownish) liquid.

The flow rates and pressure of the ultrafiltration depend on the membrane chosen and instrumentation used and are not critical to the process as long as the ultrafiltration is effective; clogging can e.g. be prevented by adding water to the clarified collagen raw hydrolysate (fraction (iii) of step (e)) prior to or during the ultrafiltration.

The collagen hydrolysate solution resulting from step (f) (first permeate) is then subjected to a nanofiltration step (g). Alternatively, a dialysis can be performed. The collagen hydrolysate solution may be used as is, or may be further concentrated as required (e.g. for dialysis a concentrated first permeate is preferred). The nanofiltration/dialysis step demineralizes the first permeate by nanofiltration and/or dialysis using a membrane with a pore size of less than 1000 Da to produce a purified collagen solution. Preferably, the membrane used for the nanofiltration or dialysis has a pore size of less than about 500 Da, preferably between about 100-400 Da, and particularly preferred between 150-350 Da. Exemplarily, membranes such as Lenntech organic nanofiltration membrane from 150 to 300 Da, Snyder NFX, and NFW series, NF 90 (Filmtec), NF 270 (Filmtec), NF 2 (Sepro), and NF PES 10 (Microdyn□Nadir), Filmtec membranes (Dupont), may be used.

The pore size used in the nanofiltration step (g) should allow aqueous monovalent ions (e.g. sodium, chloride) and optionally also divalent ions (e.g. magnesium, nitrate) and other small molecules (such as biogenic amines, heavy metals, etc.) to pass through the membrane, while holding peptides and small proteins back.

Depending on the clarity, color and odor of the collagen hydrolysate (permeate) of step (g), the resulting collagen solution may be subjected to a further, optional step of deodorization and/or dialysis. Thus, the invention further relates to a method as recited above, the method further comprising the step of (h) deodorizing the purified collagen solution of step using activated carbon and/or dialysis. Using activated carbon effectively removes residual small molecules that can be responsible for a slight smell of the collagen hydrolysate solution and thus further improves the quality of the end product. If dialysis is used the effect of repeatedly adding water has also the effect of washing the collagen solution and to further reduce unwanted components. This measure also improves the removal of salt from the collagen solution. The dialysis may be performed with or without subsequent filtration of the retentate (collagen solution) over active carbon. Alternatively, the collagen solution may also first be filtered through active carbon and then be subjected to dialysis.

The invention further relates to methods as recited above, further comprising concentrating and sterilizing the purified collagen solution or the deodorized purified collagen solution e.g. by evaporation such as direct steam injection using appropriate instrumentation (e.g. externally or internally modulated direct-contact steam heaters). The sterilization may be a UHT sterilization, i.e. a direct steam is injected in the product to reach 140°C and then the temperature is dropped down to 60°C by subjecting the product to a vacuum system in a very short time. Exemplarily, the purified collagen hydrolysate is directly injected to high pressure (above 5 bar, e.g. 7 to 10 bar) steam for a few seconds and the particles are formed and collected by reducing the pressure to vacuum (e.g. 250 mmbar) at 60°C. The invention further relates to a method as recited above, further comprising drying the purified collagen solution or the purified deodorized collagen solution, or the concentrates thereof, to produce collagen powder. The step of drying is performed by spray drying, freeze drying, lyophilizing of with a nozzle atomizer, preferably the drying is performed by continuous horizontal spray drying. Notably, the concentration and sterilizing may be performed at the same time with the drying using appropriately integrated instruments.

It was observed by the present inventors that the nanofiltration and the dialysis have a good impact on the deodorization of the collagen. Thus, by using these additional steps a superior collagen solution/powder can be produced.

In second aspect, the present invention relates to a method of producing protein hydrolysate from marine animal by-products, the method comprising the steps of: (a) providing marine animal by-product pieces, as described for the method for producing collagen hydrolysate above, (b) separating the by-product pieces into at least two fractions comprising a protein-rich fraction and a fraction comprising skin and cartilage, as described above (c) mixing the protein-rich fraction with water and separating a lipid fraction, an aqueous fraction and a protein-rich solid fraction, (d) enzymatically hydrolyzing the protein-rich solid fraction to produce a protein hydrolysate solution, (e) separating the protein hydrolysate solution into a second lipid fraction, an aqueous protein hydrolysate fraction and a second solid fraction, and (f) collecting the aqueous protein hydrolysate.

The expression "protein-rich" in the sense of the present invention indicates in the present context, proteins from flesh. Further the expression indicates that the protein content of a fraction that is "protein rich" contains only minor amounts (less than about 15%), preferably minimal amounts (less than 5%) of bones and cartilage. Ideally, the protein-rich fraction contains virtually no bones and cartilage (less than 1.5%).

Step (c) of separating the protein rich fraction into a lipid fraction, an aqueous fraction and a protein-rich solid fraction can be performed using routine methods and instrumentations. Preferably the separation is done by three phase decanter centrifugation as described above for the method of producing collagen hydrolysate. Notably, the parameters of operating the three phases decanter are adapted for the protein rich fraction as required and described in the manufacturers operating instructions for the respective instrument used. The protein-rich solid fraction is then subjected to the enzymatic hydrolysis step (d).

The enzymatic hydrolysation (d) of the protein-rich solid fraction produces a protein hydrolysate solution. The conditions of the hydrolysis such as are time temperature and pH depend on the choice of enzyme, as described above for the method of producing collagen hydrolysate. However, the proteins of the protein-rich fraction are more accessible to hydrolysis. Thus, the incubation time for the hydrolysis is significantly shorter. Exemplarily, if Protease PLUS is used as enzyme, the hydrolysis is completed in about 1 to 2 hours at a pH of 8 (about 7.5 to about 9) and at a temperature of about 60°C (about 52°C to about 65°C).

After the hydrolysis, the protein raw hydrolysate is subjected to a separation step (e) which separates the protein raw hydrolysate solution into (i) a (second) lipid fraction, (ii) an aqueous protein hydrolysate fraction and (iii) a (second) solid fraction. As indicated above, any suitable means for achieving this separation may be used. Preferably, the separation is performed by a further three phase decanter centrifugation as described above, adapting the parameters of the decanter to the softer type of material fed into it.

The (f) collecting the aqueous protein hydrolysate is then collected (step (f)) for storage or further processing as described below. One (optional) further step to improve the quality of the protein hydrolysate is to perform a demineralization (desalting) step (g). As described above for the collagen hydrolysate the demineralization can be performed by nanofiltration and/or dialysis using a membrane with a pore size of less than 1000 Da, preferably between 100 and 500 Da (or between 150 and 300 Da). The conditions applied for the nanofiltration of the collagen hydrolysate (e.g. type of membrane) fully apply to the demineralization of the protein hydrolysate.

The invention further relates to a method as recited above, further comprising concentrating and sterilizing the aqueous protein hydrolysate or the demineralized aqueous protein hydrolysate, preferably the concentration and sterilization is performed by evaporation, such as direct steam injection as described above. In addition the method of producing protein hydrolysate may further comprise drying the aqueous protein hydrolysate, the demineralized aqueous protein hydrolysate or the respective concentrate thereof, to produce protein hydrolysate powder. In one embodiment the drying is performed by spray drying, freeze drying, lyophilizing or with a nozzle atomizer as described above. Most preferably the drying is performed by continuous horizontal spray drying as described in the method of producing collagen hydrolysate. The invention further relates to a method for producing protein hydrolysate as recited above, further comprising the steps of (c') collecting the aqueous fraction of step (c) and subjecting it to filtration and/or dialysis using a membrane with a pore size of less than 1000 Da, preferably between 100 and 500 Da (most preferably between 150 and 300 Da), and (c") adding the retentate of step (c') to the protein-rich solid fraction prior to step (d). These additional steps improve the yield of the protein hydrolysate.

In a third aspect, the present invention further relates to an integrated process of up-cycling or valorizing marine animal by-products that combines the above recited methods of producing collagen hydrolysate and protein hydrolysate. The details given above for the two methods fully apply for the integrated process. In on embodiment of this aspect, the integrated process comprises the steps of (a) providing marine animal by-product pieces, wherein the by-product pieces comprise at least two components selected from flesh, skin, fish bones, fins and cartilage of the marine animal, (b) separate the by-product pieces into at least two fractions comprising a protein-rich fraction and a fraction comprising skin and cartilage, wherein the skin and cartilage fraction is essentially free of flesh, (c1) subjecting the protein-rich fraction to steps (c) and subsequent steps of the method of producing protein hydrolysate of above, and (c2) subjecting the fraction comprising skin and cartilage to steps (c) and subsequent steps of the method of producing collagen hydrolysate as described in the first aspect of the invention above. The further variations and refinements of the method of producing protein hydrolysate and the method of extracting collagen can be fully applied in the context of the integrated process of this aspect of the invention.

In any of the above described methods of any of the three aspects of the invention, the marine animal by-product used as starting material may be a by-product of fish, such as heads, viscera, fish bones, scraps and/or skin. In a preferred embodiment, the marine by-product is a by-product of tuna.

The above described methods produce collagen (hydrolysate) solutions and/or collagen (hydrolysate) powder. It has been found that the collagen hydrolysate produced by the above methods is of a very high quality. Accordingly, the present invention relates to a purified collagen (hydrolysate) solution or a collagen (hydrolysate) powder produced by the inventive method as further specified in the appended claims. In an unclaimed aspect, the collagen (hydrolysate) solution and/or the collagen (hydrolysate) powder may comprise at least one matrikine. The at least one matrikine of the collagen (hydrolysate) solution and/or powder may be any one or more of arresten, canstatin, tumstatin, tetrastatin, pentastatin 1, pentastatin 2, pentastatin 3, lamstatin, hexastatin 1, hexastatin 2, NC1 domain of collagen IV or XIX, endotropin, ectodomain of collagen XIII, XVII, XXIII or XXV, restin 1, restin 2, restin 3, restin 4, endostatin, neostatin 7, neostatin 14, palmitoyl pentapeptide-4, collagen hexapeptide GFOGER, and CLAC. However, a collagen (hydrolysate) may contain further matrikines as well as more than one, more than two, or more than three matrikines.

In particular, the invention relates to a collagen (hydrolysate) solution or powder produced by the inventive methods, wherein at least 50% of the peptides of the collagen hydrolysate or powder are < 2kDa, preferably at least about 60% of the peptides are < 2 kDa, more preferably at least about 65%, 66%, 67%, 68%, 69%, 70%, ... , 79%, 80%, 81%, 82, 83%, 84% or 85% of the peptides are < 2 kDa and wherein the purified collagen (hydrolysate) solution or powder of the invention is characterized in that the residual salt content is less than 4% by dry weight, preferably less than 2%, 1% or 0,5% by dry weight.

The present invention also relates to a protein hydrolysate or protein powder produced by the methods of the invention as specified in the appended claims. This product may be referred to as FPH fish protein hydrolysate. In one embodiment the protein hydrolysate or protein powder comprises at least 3% (wt) of omega 3 lipids and at least 1 % (wt) of phospholipids, preferably the hydrolysate or powder comprises at least 2% (wt) of mono-saturated lipids, at least 3% (wt) of polyunsaturated lipids and at least 2,5% (wt) of omega 3 lipids. In particular the purified protein hydrolysate or powder is characterized in that the residual salt content is less than 10%, 7%, 6%, 5% or 4% by dry weight, the lipid content is less than 15%, 12% or 10% by dry weight and the protein content is more than 70%, 75% or 80% by dry weight. In particular, the end products of the protein hydrolysate contain about 17 to 18% of lipids in the hydrolysate in powder with about 3.7% of phospholipids and about 2% of omega 3 lipids.

A typical protein powder end product produced by the inventive methods has a protein content of between 70-80% of protein, a total lipid content of about 11-19% (about 2-5% phospholipids) and a total mineral (ashes) content of about 6-10% (about 2-4% chloride) at a residual moisture content of about 2-4%. The product may be referred to as fish protein hydrolysate powder or FPHP. Exemplarily, the FPHP end product has about 73-76% total protein, 13-16% of total lipid (2.5% to 3.5% phospholipids) total mineral content of 7-9% (about 2.5% to 3.5% chloride). All % values in this paragraph are by weight of the end product.

The peptide profile of the collagen hydrolysate exhibits the typical profile of amino acids as dictated by the collagen protein sequence, i.e. three particular amino acids are prominent; glycine (about 18-20%), hydroxyproline (about 7-8%) and proline (about 10-12%).

The collagen hydrolysate and the protein hydrolysate produced by the inventive methods show a particular and unique peptide size distribution as described below.

In particular, the collagen hydrolysate of the present invention contains about 12-18% of peptides of a size of 4 - 10 kDa, about 60-70% of peptides of a size of 1 - 4 kDa, about 12-18% of peptides with a size of 0.5 - 1 kDa and about 3-7% of peptides with a size of less than 0.5 kDa. The collagen hydrolysate of the present invention contains less than 1%, preferably essentially no peptides larger than 35 kDa and less than 5%, preferably less than 2% and more preferably essentially no peptides larger than 10 kDa. The high content of relatively small peptide size has the advantage of having reproducible and reinforced biological properties and a higher digestibility.

The heavy metal and PCB/dioxin content is below the threshold values defined in the European union, thus the collagen hydrolysate is suitable for human and animal alimentation and/or cosmetics.

The protein hydrolysate of the present invention contains about 25-35% of peptides of a size of 4 - 10 kDa, about 45-60% of peptides of a size of 1 - 4 kDa, about 8-14% of peptides with a size of 0.5 -1 kDa and about 3-7% of peptides with a size of less than 0.5 kDa. The protein hydrolysate of the present invention contains less than 4%, preferably less than 3 or 2% peptides larger than 35 kDa and less than 5%, preferably less than 4% and more preferably less than 3% peptides larger than 10 kDa. The high content of relatively small peptide size has the advantage of a high reproducibility, good homogeneity and higher digestibility. Due to the small peptide size the hydrolysate has an excellent bioavailability and thus improved biological properties.

The profile of fatty acids of the protein hydrolysate of the invention is as follows:

| **Fatty acid** | **Relative %** |
|---|---|
| Saturated | 45-55 (about 50) |
| Unsaturated | 45-55 (about 50) |
| Mono-unsaturated | 35-42 (about 39) |
| Poly-unsaturated | 8-15 (about 11,5) |
| Omega-6 | 2,5-6 (about 4) |
| Omega-3 | 4-9 (about 6,5) |
| EPA | 0,5-2 (about 1,2) |
| DHA | 2,5-6 (about 4) |
| DPA | 0,2-1 (about 0,4) |

The Histamine content of the protein hydrolysate is less than 300 ppm, preferably less than 250 ppm, and in particular less than 200 ppm. The total amount of biogenic amines is less than1800 ppm, preferably less than 1400 ppm and in particular less than 1000 ppm. The heavy metal and PCB/dioxin content is below the threshold values defined in the European union, thus the protein hydrolysate is suitable for human and animal alimentation.

In all of the above steps of any one of the tree aspects of the present invention, additional components such as stabilizers, foam regulators, or anti-oxidants may be supplied to the reaction in order to adjust, preserve or improve the respective reaction. Suitable anti-oxidants include but are not limited to Roseen, Paramega (Kemin) and Hybrilox (Kemin) company. A skilled person will understand that many other antioxidant products are available and suitable for use in the present invention.

### Utility and industrial applicability

The inventive collagen solution and collagen powder may be used for medical, nutritional and cosmetic purposes.

Collagen injections can improve the contours of the skin. Fillers that contain collagen can be used cosmetically to remove lines and wrinkles from the face. Collagen can also improve scars and can help heal wounds by attracting new skin cells to the wound site. It promotes healing and provides a scaffold for new tissue growth. Collagen dressings be used for chronic wounds that do not respond to other treatment, wounds in tissues that expel bodily fluids such as urine or sweat, granulating wounds, necrotic or rotting wounds, partial and full-thickness wounds, second-degree burns, as well as for areas of skin transplantation and skin grafts. Collagen-based membranes have also been used in periodontal and implant therapy. In oral surgery, collagen barriers can prevent fast-growing cells from migrating to a wound in a tooth, thereby preserving space where tooth cells have the chance to regenerate. Collagen tissue grafts from donors have been used in peripheral nerve regeneration, in vascular prostheses, and in arterial reconstruction. Collagen supplements or formulations may be used in the treatment of osteoarthritis. Collagen can decrease painful symptoms and improving joint function in people with osteoarthritis. With respect to cosmetic uses, collagen can be used for skin revitalization.

Collagen hydrolysate, due to the fact that it mainly contains smaller peptides, can be ingested in the form of a dietary supplement or functional food or beverage to aid joint and bone health and enhance skin health. Hydrolyzed collagens, such as those resulting from the methods of the present invention, have a much smaller molecular weight in comparison to native collagen or gelatine. More than 90% of hydrolyzed collagen is digested and available as small peptides in the blood stream within one hour. From the blood, the peptides are transported into the target tissues (e.g., skin, bones, and cartilage), where the peptides act as building blocks for local cells and help boost the production of new collagen fibres.

### Definitions

The term "hydrolysis" or "hydrolysing" in the context of the present invention relates to the treatment a of by-product fraction with a protease enzyme. Other types of hydrolysis such chemical hydrolysis (e.g. hot acidic hydrolysis) are explicitly not within the scope of the present invention. The term "hydrolysate" refers to the product of enzymatic hydrolysis.

"Solids" are components that produce a sediment in the respective solution and/or can be removed from the solution by filtration with a sieve with a mesh size of 0.5 mm or can be removed from the solution by centrifugation with a g-force of up to 20xg.

The term "ultrafiltration", is used to relate to filtration through semipermeable membranes in which suspended solids and solutes of high molecular weight are retained in the so-called retentate, while water and low molecular weight solutes pass through the membrane in the permeate (filtrate). An ultrafiltration will hold back molecules of a molecular weight of between 2 kDa and 100 kDa.

The term "nanofiltration" is used analogously to microfiltration with the difference that the nanofiltration will hold back molecules with a molecular weight of between 100 Da and 1000 Da and need a higher pressure inside the membrane.

The term "pore size" in relation to ultrafiltration and nanofiltration describes the molecular weight cut-off of the respective membrane or filter, e.g. a pore size of 300 Da will hold peptides and other solutes with a MW of >300 Da back and let peptides and amino acids and other solutes with a MW of <300 Da pass the membrane.

"Filtration membrane" refers to sheets of membranes as well as other configurations of material (filter/membrane stacks, ceramic cylinders, etc.) that fulfil the function of filtration.

"Permeate" is the solution that exits or passes a given filter or membrane from a filtration step. Correspondingly, "retentate" is the fraction that at the end of the filtration has not passed a given filtration membrane, a retentate may be a solution or a solid fraction, if the retentate is a solid fraction it may or may not be dissolved again in a further solution of the same or different hydrophobicity as the solution from which the retentate originated.

The term "demineralizing" as well as the term "desalting" indicates the removal of salt (such as but not limited to NaCl) from a composition or solution.

The terms "dialysing" and "dialysis" is referred to as a process to remove excess salts, toxins and other small molecule components by diffusion using a semipermeable membrane by adding water and push excess compounds through the membrane, thereby "washing" the remaining components. The effect of a dialysis is similar to a nanofiltration, except for the driving force that is used (diffusion vs. pressure). The solution processed by dialysis also becomes diluted, while the solution subjected to nanofiltration becomes more concentrated.

The term "purified" and "purification" indicate in their broadest sense, to enrich or isolate from a mixture of different components A, B, C, ... one of the components A, B, or C.

The term "deodorizing" in the context of the present invention indicates a process that removes components that cause a composition to smell.

The term "concentrate" signifies in the present context the increase of dry matter of a solution by removal of water.

The term "dry" describes a composition with a water content of less than 10%, preferably less than 5%, more preferably less than 4% or 3%. Correspondingly the process of "drying" indicates the removal of water from a solution to an extent that the resulting composition has a water content of less than 10%, preferably less than 5%, more preferably less than 4% or 3%.

"Aqueous" solutions are solutions that do not comprise organic solvents or comprise less than 10% or less than 5% organic solvents, i.e. solutions that are essentially water-based.

Extracellular proteins and glycosaminoglycans (GAGs) may undergo limited enzymatic cleavage resulting in the release of fragments exerting biological activities, which are usually different from those of the full-length molecules (Richard-Blum & Salza, Experimental Dermatology, (2014), Vol. 23, p. 457-463). These bioactive fragments are herein referred to as matrikines. These fragments regulate a number of physiopathological processes including angiogenesis, cancer, fibrosis, inflammation, neurodegenerative diseases and wound healing. Exemplary matrikines include arresten, canstatin, tumstatin, tetrastatin, pentastatin 1, pentastatin 2, pentastatin 3, lamstatin, hexastatin 1, hexastatin 2, NC1 domain of collagen IV or XIX, endotropin, ectodomain of collagen XIII, XVII, XXIII or XXV, restin 1, restin 2, restin 3, restin 4, endostatin, neostatin 7, neostatin 14, palmitoyl pentapeptide-4, collagen hexapeptide GFOGER, and CLAC.

The expression "about" in front of any values given in this specification indicates a variation of about 10%, preferably of about 5% of the value.

### Examples

The following examples are illustrating specific embodiments of the present invention and are not to be construed so as to limit the scope of the invention as defined in the appended claims.

This example shows the valorisation of 4 different co-products available: cooked Scraps (from the cannery), protein dough, charged waters and cartilage and skin residues (from an oil recovery process from tuna heads).

### Raw material

The tests were carried out using whole tuna heads from the Seychelles and from the Indian ocean. The heads were packaged in cardboard pallets and frozen in cold storage before being processed. The tuna heads from Seychelles come from tuna that has not been preserved and frozen in brine, which makes a significant difference to the composition and therefore to the salt content.

The heads were then processed on an AM2C Barracuda Beluga 1830 separator to produce the protein dough and cartilage residue.

Volumes used: 19 pallets were received with a total weight of 7211 kg. 2 species of tuna were provided:
(i) Yellowfin tuna (*Thunnus albacares*): 2T
(ii) Long-finned tuna (*Thunnus alalunga*): 5.2T (also referred to as albacore or thon germon)

### Raw material characteristics:

On receipt, some heads were not frozen, mainly long-finned tuna. A random temperature control gave values between -15°C and 2.7°C. The yellowfin tuna heads were frozen and glued together, a mallet and crowbar had to be used to perform a grinding test and quality control sampling. The long-finned tuna heads were mostly frozen on the periphery of the pallet, and at a temperature of -3.5 to 2.7°C inside. Blood was flowing from one pallet. According to the supplier, all the heads were placed in freezing chambers. The long-finned tuna heads being smaller, a settling occurred and the cold did not seem to diffuse sufficiently to ensure a fast and total freezing. When the heads were used, some heads showed browning or even obvious signs of alteration on some of them. Blood had flowed into the bottom of the bins.

**Table 1: Sensory characteristics of raw material.**

| **Raw material** | **Mash of long- finned tuna heads** | **Mash of Yellowfin tuna heads** | **Whole yellowfin tuna head not visually fresh** |
|---|---|---|---|
| TVB-N (mg/100g) | 86.8 | 110.5 | 192.1 |
| IP (meq O2/kg MG) | 23.7 | 43.7 | NA |

| **Heavy metals (mg/kg)** | | | |
|---|---|---|---|
| Lead | <0,02 | 0.03 | NA |
| Cadmium | 0.146 | 0.311 | |
| Arsenic | 3.48 | 2.73 | |
| Mercury | 0.084 | 0.165 | |

| **Biogenic amines (mg/kg)** | | | |
|---|---|---|---|
| Putrescine | 51 | 34 | NA |
| Cadaverine | 26 | 96 | |
| Tyramide | 70 | 26 | |
| Spermidine | 18 | 12 | |
| Spemine | 7 | 5 | |
| Histamine | 94 | 59 | |

Histamine criteria according to Regulation (EC) No 2073/2005 and its applicable amendments: For fishery products: the average content of 9 samples of fish must not exceed 100 mg/kg; 2 samples may contain more than 100 mg/kg but not more than 200 mg/kg; no sample may exceed 200 mg/kg. For products matured enzymatically or in brine: the above limits are to be multiplied by 2. TCB-N = total volatile basic nitrogen.

Reduced to a dry matter content of 12%, the heavy metal contents comply with the regulatory thresholds for animal feed.

The levels of IP, ABVT and biogenic amines are high, however, indicating that freezing was too slow. The quality of these raw materials is therefore relatively low as compared to material that is available through other sources. The present example therefore demonstrates the superior effects of the inventive methods as even from less than optimal starting material highly purified products of high quality can be obtained.

### Process

The simplified material balances are described in Figure 1 with respect to the main steps of the method of producing protein hydrolysate (Fig. 1A) and collagen hydrolysate (Fig. 1B). The expected products are:
➢ Collagen demineralised powder
➢ Demineralised protein hydrolysate (dough)
➢ Mineral residues

The balances described in **Figure 1** are expressed per tonne of raw material (Fig. 1A balances for the protein hydrolysate process, Fig. 1B for the collagen hydrolysate process).

### Equipment used

Shredder: A Pallman shredder for shredding frozen fish plates to obtain 1 or 2 cm chips was used to process the raw material into marine by-product pieces. The dimensions of the cutting chamber of the PALLMANN grinder are 350 mm (thickness) by 750 mm (width).

Separator: An AM2C supplied a Barracuda Beluga 1830 separator with a 3 mm sieve was used as a separator to product the protein rich fraction and the fraction containing skin and cartilage.

Grinder (optional): BIRO crusher type AFM G 52 was used with a 12 -14mm grid for cartilage and skins from the separator so that the cartilage is finely ground to facilitate hydrolysis.

A 5m³ agitated reactor equipped with a variable speed drive and a half-shell heating system was used to effect enzymatic hydrolyses. It comprises a manual bottom valve coupled with a pneumatic drain valve. At the outlet of this reactor, a sieve screw is used to recover cartilage residues. A minimum volume of 700 litres is required to start the agitation. Promod 950L was used as enzyme.

As three phase decanter a GEA ACD 345 was used and operated according to the recommendations of the manufacturer to separate the lipid phase, hydrolysate and residual solid phase.

One skid Ultrafiltration (UF) / Nanofiltration (NF): This UF/Nano skid can be equipped with membranes of various different porosities. Two different membranes were used in this example (a) an ultrafiltration membrane type HFK-131 Food & Dairy UF with surface elements of 4.2m² and porosity of 10000 Daltons and (b) a nanofiltration GE Waters and Process Technologies membrane of type DK3840C-50D with a surface area of 5.4m² and a porosity of 150 -300 Daltons.

Alternatively an ultrafiltration membrane type HFK-328 Food & Dairy UF elements with 4.3m² surface area and 5,000 Dalton porosity can be used. The filtration instrument was equipped with a 100-litre supply tank, which limits the volumes to be processed, but it can be equipped with an external tank to increase the volumes that can be processed. The filtration unit allows to produce and purify collagen hydrolysate (1kDa), demineralize collagen with a Nano membrane (150-300 Da) and perform the pre-concentration and demineralisation of hydrolysates (with Nano 150-300Da membrane).

A filter press with active carbon was used in the present example. The filter press was used to remove certain colouring or odour particles. Coal and Smellrite (deodorant) at 3% of the dry matter each were mixed with the hydrolysates. Then the filtration was performed with filter plates comprising adjuvant type Pall K200 to retain the coal and Smellrite in a press cake.

As evaporator a single-effect evaporator with thermo-compression was used. This plate evaporator has a capacity of about 1 T/h and increased the concentration of solutions to between 35 and 40% of dry weight content. A minimum volume of 300 litres is required.

Drying: For the final drying step a nozzle atomiser with a 200bar HP pump and equipped with a 800µ pre-filter was used, the nozzle atomizer was adapted to dry soluble protein and fish protein product. Other atomizers can be used that allow the injection of anti-caking agent in the pipes of the pneumatic transport, which facilitates the extraction of the moving powders. The nozzle choices take into account the viscosity and dry matter content of the products to obtain a sufficient spray pressure in the chamber.

Packaging: the final products were packaged using a vacuum packaging machine (Bernhardt) to make small vacuum bags to protect the products against oxidation.

### Timeline for the procedure

The tests were carried out on two similar batches of 3 to 4 tons of raw material (heads). Each test took a total of two days, the second batch allowed for an optimization compared to the first batch.

### Day 1

➢ Control of raw material

### Day 2: First batch

➢ Grinding of yellowfin heads / Pallman (approx. 1.5T)
➢ Separation of protein paste/cartilage on long-finned tuna heads (1.8T) then grinding of yellowish tuna heads
➢ Hydrolysis of long-finned tuna heads protein paste (1.9T) followed by decantation
➢ Nanofiltration / hydrolysate sample protein paste after addition of salt
➢ Atomisation of hydrolysate of protein paste (batch 1)

### Day 3: First and second batch

➢ Cartilage hydrolysis (batch 1)
➢ Ultrafiltration of cartilage hydrolysate (hydrolysate 1)
➢ Deodorisation and decolorization of collagen hydrolysate
➢ Grinding of yellowfin tuna heads / Pallman (about 0.5T)
➢ Separation of protein paste/cartilage on mash of yellowfin tuna heads and long-finned tuna heads (3,4T)
➢ Hydrolysis of yellowish head dough (1.4T) followed by decantation

### Day 4: second batch

➢ Concentration hydrolysate protein paste and atomisation in 2 batches with different antioxidants (batch 2 and 3)
➢ Nanofiltration of collagen hydrolysate sample (batch 1) after addition of salt
➢ Cartilage hydrolysis (batch 2)

### Day 5: second batch

➢ Ultrafiltration of cartilage hydrolysate (hydrolysate 2)
➢ Deodorisation and decolorization of collagen hydrolysate (batch 2)
➢ Vacuum packaging of hydrolysate samples

### Day 6:

➢ Collagen concentration

### Day 7:

➢ Collagen drying (Tecoma dryer)

The antioxidants Paramega and Hybrilox (both from Kemin) have been used to stabilize the products as follows. Batch 1: Paramega on the protein paste was used at 500ppm/paste and Paramega on the product before drying was used at 5,000 ppm/dry matter or 900ppm (dry matter 18.1%). Batch 2: Hybrilox was used on the paste and at the start of hydrolysis at an equivalent of 2000ppm/paste; after concentration and before drying, Hybrylox was used on batch 2 at 7,500 ppm/dry matter and Paramega was used on batch 3 at 2,000 ppm/dry matter. Six samples from each test were conditioned under vacuum to allow comparison the oxidation according to vacuum over several months. All samples exhibited a satisfactorily shelf life of over 12 months without signs of degradation.

### Separation

The separation of the tuna heads into a skin and cartilage containing fraction on one side and a fraction rich in protein and flesh on the other side was carried out on the basis of 7.2 tons of processed heads as described above (raw material) in two batches:

### Batch 1:

> Separation of long-finned tuna heads: From 1845kg of heads, with the addition of about 250L of water during the separation, we obtained about 1900kg of protein rich fraction (paste), or about 90% of paste compared to the weight of the head (not calculating the added water).
> Separation of previously ground yellowfin tuna heads: From 1342 kg of heads (+250L water), 1164 kg of protein rich paste (about 68% of the raw material) is obtained.

Overall, 20% skin/cartilage fraction relation to the weight of the heads used has been obtained (about 650 kg).

Because the heads were still partially frozen, the mechanical separation was sub-optimal and the resulting skin/cartilage fraction was still contained an amount of flesh. The process was optimized for batch 2 as described below.

### Batch 2

> Separation of previously ground yellowfin tuna heads: From 638 kg of heads (+150L water), 675 kg of protein paste is obtained (about 82% of the raw material).
> Separation of long-finned tuna heads: From 3277 kg of heads (+ about 250L water) about 3300 kg or protein paste has been obtained.

For the batch 2, about 7% skin/cartilage (283 kg) compared to the weight of heads used was obtained.

The difference in yield of the skin/cartilage fraction comes from the fact that more yellowfin tuna was processed on the second day. The difference can also be explained by the improvement in the separation obtained by the difference in the settings (increase in pressure and temperature) that allowed for better separation. The skin/cartilage fraction of batch 2 was less "red" and contains less flesh as compared to batch 1.

Over the two batches, this represents an average of 13% skin/cartilage in relation to the head weight.

In a further series a protein paste (PP) to cartilage (C) ratio of 61% PP (5.8 T) to 39% C (3.7 T) has been obtained from raw material.

### Composition of protein-rich fraction:

**Table 2: Composition of the protein-rich fraction**

| **Sample** | **Moisture %** | **Dry matter %** | **Ashes %** | **Minerals/dry matter %** | **Protein %** | **proteins/dry matter %** | **Fat content %** | **Fat/dry matter %** |
|---|---|---|---|---|---|---|---|---|
| Long-finned tuna | 67,30 | 32,70 | 3,30 | 10,10 | 16 | 49,10 | 14,90 | 45,57 |
| Yellowfin | 72.9 | 27.1 | 4.0 | 14.65 | 14.1 | 52.1 | 7.5 | 27.75 |

The mineral and protein contents are quite similar for both species, while the fat content is higher in the protein fraction of long-finned tuna.

### Composition of skin/cartilage fraction:

**Table 3: Composition of skin/cartilage fraction**

| **Sample** | **Average dry matter %** | **Average minerals %** | **Minerals / dry matter %** | **Average proteins %** | **Protein / dry matter %** |
|---|---|---|---|---|---|
| Yellowfin tuna 20/11 | 57.89 | 23.13 | 39.95 | 21.33 | 36.85 |
| Long-finned 20/11 | 61.78 | 32.80 | 53.09 | 21.20 | 34.31 |
| Long-finned 21/11 | 60.88 | 31.10 | 51.08 | 24.34 | 39.97 |

The mineral content is higher in cartilage obtained from long-finned tuna heads (over 50%) compared to 40% for yellowfin tuna.

### Grinding of cartilage and skins

Fine grinding of the cartilage is important to optimise the hydrolysis of the collagen contained in the cartilage (performance is even better when the grinding is fine). At the exit of the separator, the cartilage was ground on a BIRO grinder with a 20mm grid.

### Enzymatic hydrolysis (protein-rich fraction)

For the enzymatic hydrolysis of the protein paste (protein-rich fraction) the following conditions were used:

**Table 4: Protein hydrolysis conditions and yield (RM = raw material, DM = dry matter)**

| | **Hydrolysis 1** - **protein paste** | **Hydrolysis 2** - **protein paste** |
|---|---|---|
| Raw material | Long-finned protein paste | Yellowfin protein paste |
| Anti-oxidant | Paramega 500ppm/paste | Hybrilox 2000 ppm/paste |
| Weight, raw material (RM) | 1900 kg (about 532 kg DM) | 1400 kg |
| added water | 600 l (31% of the RM)+ 100 l | 700 l + 100 l |
| Tub level | 2,5 m³ | |
| Enzyme | Promod 950L, Biocatalysts | Promod 950L, Biocatalysts |
| Enzyme amount | 4 kg - 0.21% on RM weight | 3 kg - 0.21% on RM weight |
| T °C hydrolysis | 65°C | 65°C |
| Hydrolysis time | 2 h | 3h |
| Decanting | No oil extraction performed | Oil extraction: 150 litres |
| Concentration | No concentration (about 15% DM) | 420 litres at 33.36% DM. |
| Anti-oxidant | Paramega 5,000 ppm/DM on batch 1 | Hybrilox 7,500 ppm/ DM on batch 2 Paramega 2,000ppm/DM on batch 3 |
| Drying | Product too liquid - drying difficulties 13.5kg (batch 1) | batch 2: 41kg batch 3: 13kg+8kg (tower sweeping) |

Composition of the extracted fat phase (batch 2) was: dry matter: 98.5%, minerals: 0%, proteins: 0.7%. Thus the process yields an oil with a relatively high purity.

### Enzymatic hydrolysis (skin/cartilage fraction; collagen)

For the enzymatic hydrolysis of the cartilages (skin and cartilage fraction containing collagen) the following conditions were used

**Table 5: Collagen hydrolysis conditions and yield (RM = raw material, DM = dry matter)**

| | **Hydrolysis 1 CARTILAGES** | **Hydrolysis 2 CARTILAGES** |
|---|---|---|
| Raw material | ground cartilage BIRO 20mm grid | ground cartilage BIRO 20 mm grid |
| Weight RM | 350 kg (194kg DM) | 283 kg |
| Added water | 780 l | 700 l + 150 l |
| Tank level | 1,15 m³ | 1 m³ |
| Enzyme | Promod 950L, Biocatalysts | Promod 950L, Biocatalysts |
| Enzyme amount | 1.7kg - 0.48% on RM weight | 1.4 kg - 0.49% on RM weight |
| T °C hydrolysis | 65°C | 65°C |
| Hydrolysis time | 5 hours | 5 hours |
| Tailings (reactor) | 300 kg (18%/RM) - DM : 62.5%. | Not weighed |
| DM soluble | Final DM = 5.3 | Final DM = 5.7 |

The hydrolysis was carried out without particular problems and the emptying of the reactor for both batches was achieved fairly well controlled with a little water "pushing".

The collagen hydrolysate obtained were quite clear. And it was possible to obtain fairly white fraction (tailings) of solid cartilage and bones which could be finely ground into a white powder, forming an interesting fraction as a source of minerals for nutraceutical markets.

### Filtration

### Nanofiltration of hydrolysate from protein paste, protein hydrolysate (desalination)

Prior to the filtration the protein hydrolysate had a mineral content of about 15% in the dry matter. For the nanofiltration of the protein hydrolysate organic nanofiltration membrane (150 to 300Da) was used.

The initial volume of hydrolysate was 73 liters; during the process water was added to maintain flow rate and improve the desalting. The total volume of hydrolysate processed was 110 litres. The resulting fractions of the nanofiltration of the protein hydrolysate are treated as follows; the permeate was stored in a plastic container (fraction containing a high concentration of salts and only very few proteins for later disposal), the retentate was recycled into the pilot's feed tank (noble protein fraction). After a retentate concentration step, distilled water was added to extract more salts (dialysis). Volume after concentration = 61 litres; total volume of water added: 102 litres (52+16+34).

Regular monitoring of the dry extract and the resistivity of the retentate and permeate fractions was performed at the outlet. The resistivity to dry matter (R/ES) ratio is a good indicator of the soluble mineral content. The process was continued for 12 hours in recycling to monitor the performance of the membranes over time.

Regular samples were taken during the nanofiltration. Some of these samples were analysed (dry matter, proteins, minerals) and the conductivity / dry matter ratio was thereby monitored. The ratio was reduced by a factor of 5 in the retentate (from over 260 to a final value of about 51).

Flowrates: The membrane surface area used was 5.39m². The permeate flow rate varied from 15 l/h/m² to 5 to 6 l/h/m² after 15 to 18 hours which is good and quite classic for this type of membrane.

The following characteristics of the resulting protein hydrolysate fractions from the NF was obtained:

| **Sample** | **volume (L)** | **DM %** | **Quantity DM** | **minerals / DM %** | **Quantity minerals** | **protein / DM %** | **Quantity Proteins** |
|---|---|---|---|---|---|---|---|
| hydrolysate input | 110 | 14.76 | 16.3kg | 19.92% | 3.2kg | 62.75% | 10.2kg |
| Final permeate | 157 | 4.25 | 6.7kg | 24.31% | 1,6kg | 47.25% | 3.2kg |
| Final retentate | 55 | 23.3 | 12.8kg | 2.92% | 0,4kg | 70.21% | 9.0kg |

The protein hydrolysate fraction the retentate. After nanofiltration, its mineral content only represents 2.92% of the dry matter, which is very satisfactory and below the standards of prior art hydrolysates. About 90% of the nitrogenous material is found in the retentate. Losses of amino acids or small peptides are very weak. Only 10% of the ashes initially present in the hydrolysate are found in the retentate. The demineralisation has therefore been very effective.

### Filtration of hydrolysate from skin/cartilage fraction, collagen hydrolysate (desalination)

After hydrolysis of cartilage and skin, the collagen raw hydrolysate obtained after separation is purified by two successive filtration steps:
1) Ultrafiltration UF 10kDa : Kock HKF 131 UF on the cartilage hydrolysate to produce collagen and remove "impurities": the retentate fraction containing large proteins and fat residues can be recycled with other protein hydrolysates (scraps, protein paste, charged water). The collagen hydrolysate is found in the permeate.
2) Nanofiltration NF 300Da on the permeate from the UF. This step makes it possible to demineralise the collagen hydrolysate: noble fraction = retentate. Permeate (= "salt water"). The membrane used was a thin-film nanofiltration membrane characterized by an approximate molecular weight cut-off 150-300 daltons for uncharged organic molecules (GE Dairy Processing Sanitary Nanofiltration D-Series)

### Ultrafiltration (batch 1)

The collagen hydrolysate was processed with continuous UF, without recycling or dialysis (no recirculation or addition of water). Ultrafiltration was started with a volume of 80 litres (tank capacity). This volume decreases by a volume corresponding to the permeate volume. The volume is then completed in order to continue ultrafiltration.

The cartilage hydrolysate was processed in 2 batches:
> Lot 1: 366 litres of processed hydrolysate
> Lot 2: 280 litres of processed hydrolysate

The resulting permeates contained about 10% minerals and 90% proteins. The flow rates were about 50 l/h/m² at start-up and 30 l/h/m² at the end of filtration.

The following characteristics of the collagen hydrolysate fractions from the UF were obtained:

| UF batch 1 Lot 1 | **volume (L)** | **Dry matter (DM) %** | **% minerals / DM** | **Quantity minerals** | **% protein / DM** | **Quantity Proteins** |
|---|---|---|---|---|---|---|
| **hydrolysate input** | 366 | 6.2 | 9.8 | 2.2 kg | 79.9 | 18 kg |
| **Mean permeate** | 286 | 3.1 | 11.5 | 1.0 kg | 90.8 | 8.0 kg |
| **Retentate at the end** | 80 | 15.4 | 9.1 | 1,1kg | 49.1 | 6.1kg |

| UF batch 1 Lot 2 | **volume (L)** | **Dry matter (DM) %** | **% minerals / DM** | **Quantity minerals** | **% protein / DM** | **Quantity Proteins** |
|---|---|---|---|---|---|---|
| **hydrolysate input** | 280 | 6.2 | 9.8 | 1.69 kg | 79.9 | 13.8 kg |
| **Mean permeate** | 200 | 3.0 | 13.1 | 0.8 kg | 90 | 6.5 kg |
| **Retentate at the end** | 80 | 16.1 | 9.3 | 1.2 kg | 48.5 | 6.2 kg |

In this balance, the permeate composition is an average of the different analyses weighted by the volume obtained at the time of the analysis. The composition of the retentate was reproducible. More than half of the proteins are in the permeate (collagen hydrolysate).

The total of 646 litres of cartilage hydrolysate was processed with UF in 2h41. The flow rate has decreased over time: between 216L and 266L of permeate/hour at the beginning of UF, compared to 160L/h at the end of UF (after 1 hour); i.e. a flow rate of 49L/h/m² at the beginning and 30L/h/m² at the end of filtration.

Considering the collagen yields obtained (>50%), no dialysis (no addition of water) was necessary to optimize the collagen yield. Thus, the 10KDa membrane allows direct ultrafiltration without dialysis, which means water savings and indicates that also a smaller surface area of the membranes installed can be effectively operated to reduce costs.

### Ultrafiltration (batch 2)

Due to the quantities of water added for hydrolysis to ensure good agitation, the dry matter content of the hydrolysate of batch 2 was rather low (about 5%). The hydrolysate was therefore concentrated before ultrafiltration to be closer to the values of the material balances (14 to 15%). A value close to 11% / dry weight was obtained.
> Volume processed: 263 litres concentrated at 10.69%.

The conditions and membranes were the same as for batch 1. The permeate contained about 10% minerals and 90% proteins, as for the first batch. The protein content of the retentate was stable over the processing time. Here the flow rates were lower than during ultrafiltration of the first cartilage hydrolysate batch: the flow rate was about 23 L/h/m² at the beginning and 7 L/h/m² at the end. This difference is due to the difference in hydrolysate concentration and viscosity since the second hydrolysate was previously concentrated.

The following characteristics of the collagen hydrolysate fractions from the UF were obtained

| UF Batch 2 | **volume (L)** | **Dry matter (DM) %** | **% minerals / DM** | **Quantity minerals** | **% protein / DM** | **Quantity Proteins** |
|---|---|---|---|---|---|---|
| **Hydrolysate input** | 263 | 10.69 | 9.8 | 2.7 kg | 79.9 | 22.5 kg |
| **Permeate** | 211 | 9.3 | 10.5 | 2.1 kg | 89.9 | 17.6 kg |
| **Retentate** | 52 | 16.1 | 7.5% | 0.6 kg | 86.2 | 7.3 kg |

The composition of the hydrolysate input was estimated to be identical to the first batch. On the other hand, its dry matter was higher because the hydrolysate was concentrated beforehand.

The proportion of protein in the permeate (collagen hydrolysate) is greater than 70%. This yield is better than for the first batch. This may be explained by the fact that the flesh/cartilage separation may have been more effective in batch 2.

### Nanofiltration of collagen hydrolysate (batch 1)

After the ultrafiltration described above, nanofiltration is carried out on the permeate obtained from the ultrafiltration in order to remove the minerals present.

At the end of nanofiltration, the retentate is recycled into the feed tank to allow several passages of the liquid through the membrane. Thereby, the retentate is concentrated while the permeate (salts) is successively eliminated. After concentration, water was added to perform dialysis and further improve the elimination of soluble minerals. The process was operated for 12 hours in a closed circuit to monitor the performance of the membranes over time.

This test was carried out on a sample of the first batch of collagen hydrolysate after addition of salt to obtain a mineral content equivalent to that of collagen obtained from heads preserved in brine.

The volume of initial collagen hydrolysate was 119 litres which could be reduced by concentration/desalting to a volume of 40 litres (before dialysis). For the dialysis a total volume of water of 100 litres was added in different volumes (40+20+20+20+20 L).

The protein content in the permeate was low, the permeate contains mainly minerals (80%). The protein content increased a bit over time. The higher content at the end was due to the long duration of the filtration (12 hours), which was intended in order to check the fouling rate of the membranes.

The mineral content in the retentate (collagen hydrolysate) decreases rapidly: it is divided by 2 in a quarter of an hour. A dry mineral content of about 3% is reached after 3 hours.

The initial flow rate was 78 l/h/m². After a 3-fold concentration (FCV3), it increases to 42 l/h/m². After water addition, the flow rate recovered to 74 l/h/m². The flow rate after 12 hours in closed circuit was 38 l/h/m². The following characteristics of permeate and retentate were observed:

| NF | **volume (L)** | **Dry matter (DM) %** | **% minerals / DM** | **Quantity minerals** | **% protein / DM** | **Quantity Proteins** |
|---|---|---|---|---|---|---|
| **Hydrolysate input** | 119 | 3.4 | 27.6 | 1.1 kg | 67.9 | 2.7 kg |
| **Permeate** | 181 | 1.1 | 81.7 | 1.6 kg | 14.7 | 0.3 kg |
| **Retentate** | 38 | 11.8 | 3.8% | 0.2 kg | 88.1 | 4.0 kg |

The composition of the retentate corresponds to the final retentate analysed.

The permeate composition is an average of the permeate compositions during filtration, weighted by the associated volumes. The mineral content in the permeate is probably overestimated. The protein content in the retentate is probably also overestimated. The sum of the quantities of proteins and ash in the retentate and permeate is greater than the initial quantity in the solution before nanofiltration.

After correction, it was observed that only 10% of the proteins were eliminated in the permeate. Less than 20% of the ashes are in the retentate. The nanofiltration has therefore made it possible to effectively separate the minerals from the collagen hydrolysate and the demineralisation was very effective. A mineral content of 3.8% is achieved in collagen hydrolysate, which is in line with market standards. It was observed also the nanofiltration and the dialysis has a good impact on the deodorization of the collagen.

### Deodorisation and discoloration on a plate filter press

After the nanofiltration has been completed, a portion of the collagen hydrolysate has been subjected to discoloration and deodorisation using a plate filter press (active carbon) as described above. It should be noted here that the collagen obtained on the basis of the present raw material used remained more colourful than a collagen fraction obtained from lighter fish skins. However, the colour and odour were satisfactorily and have been improved compared to the initial test.

### Concentration and drying

### Protein hydrolysate

The various drying operations were carried out on a spray drying tower. The spray dryer is composed of a tower with a conical bottom and with nozzles for spraying and a high-pressure pump. This spray dryer was built by TGE and has a capacity of 250 I/h of evaporating capacity.

The first batch of protein hydrolysate was dried directly (i.e. without further concentration on separation steps). Due to its low dry matter content (15%), it was not possible to obtain sufficient pressure from the HP pump (high pressure) due to nozzle configurations and low viscosity. The high fat content of the first batch of protein hydrolysate (lipid content of 24%) led to poor spraying in the drying chamber and to gluing in the tower. This problem can be solved by using an anti-caking agent.

The second batch of protein hydrolysate was previously concentrated be evaporation and had a content of 33% of dry matter. Driving the decanter centrifugation at a higher temperature and a longer hydrolysis made it possible to extract part of the fat in the form of a fluid oil. Finally, the initial content of yellowfin tuna protein paste (used for this test batch) was lower than that of long-finned tuna. The drying process was therefore better than for the first batch, only a very slight sticking on the tower was observed.

The addition of an anti-caking agent improves the fluidity in pneumatic conveyors and the various rotary valves and leads to an improved drying process of the protein hydrolysate.

### Collagen hydrolysate

Due to the lower volumes, the deodorised collagen hydrolysate was concentrated and dried on a alfa Laval vacuum evaporator. Batch 1: 70 L with a brix (dry soluble matter) of 25/30%, Batch 2: 53 L with a brix of 30% + 7 L with a brix of 10%.

The concentrated collagen solutions were dried on a Tecoma Gatedryer. The quantities obtained are as follows: Batch 1: 19 kg, Batch 2: 14 kg. The powder obtained was a light, white to ivory coloured powder.

### Composition of the hydrolysates obtained

### Characteristics of protein (powder) hydrolysates

### Nutritional composition

| | **Protein hydrolysate batch 1** | **Protein hydrolysate batch 2** | ***Protein hydrolysate batch 2**** | **Protein hydrolysate batch 3** |
|---|---|---|---|---|
| Available quantity | 13.5 kg | 41 kg | | 21 kg |
| Humidity % | 2.9 | 1.08 | *3.1* | 5.08 |
| Proteins % | 64.68 | 71.41 | *71.4* | 68.21 |
| Proteins/dry matter % | 66.61 | 72.19 | *73.7* | 71.86% |
| Fats % | 23.89 | 12.26 | *11.2* | 12.27 |
| Lipids/dry matter % | 24.60 | 12.39 | *11.6* | 12.93 |
| Minerals % | 4.89 | 12.70 | *12.5* | 12.08 |
| Minerals/dry matter % | 5.04 | 12.84 | *12.9* | 12.73 |

| | | | | |
|---|---|---|---|---|
| ** Eurofins analysis (Eurofins NDSC Food Testing Germany GmbH)* | | | | |

Note that the only difference between batch 2 and 3 is the type of antioxidant and the level of drying (dry matter content). Hydrolysates 2 and 3 contain 72.6% protein and 12.3% fat in dry matter. Their mineral content (12.8%) is higher than in the hydrolysate of batch 1 (5%), without any particular reason except that the protein paste from the long-finned tuna heads was used for the first batch and yellowfin tuna for the second batch.

It should be noted that only batch 1 was subjected to a nanofiltration. The dried and analysed samples of batches 2 and 3 were not demineralised, it was believed that the salt content would be low due to the absence of brine freezing of the raw material but the final mineral content is relatively high. Thus, the implementation of a nanofiltration step is recommended to reduce overall mineral content of the protein hydrolysates.

### Quality

The quality of the different batches of protein hydrolysates was tested.

| **Contaminant** | **batch 1** | **batch 2** | **batch 3** |
|---|---|---|---|
| TVB-N | 208.53 | 200.62 | n.a. |
| Mesophilic aerobic germs | <10 | 820 | 1940 |
| Enterobacteria | <10 | <10 | n.a. |
| Sulphate reducing bacteria | <10 | 80 | 80 |
| Salmonellae | / | / | / |
| Yeasts and fungi | <10 | <10 | <10 |

Assays for biogenic amines, PCBs and heavy metals have been launched on the hydrolysate of batch 2

| | **Analyses** | | **Regulations** |
|---|---|---|---|
| Contaminants | Content in mg/kg (ppm) | | Maximum levels in mg/kg (ppm) |
| Heavy metals | results for protein hydrolysate batch 2 | hydrolysate equivalent at 12% humidity | foodstuff for animals with a moisture content of 12 % |
| Arsenic | 6.58 | 5.98 | 25 |
| Cadmium | 0.267 | 0.24 | 10 |
| Mercury | 0.536 | 0.49 | 0.5 |
| Lead | 0.02 | 0.02 | 2 |

Heavy metal levels were well in compliance with the regulations, only the mercury content was close to the limit.

| | **Analyses** | **Regulations** |
|---|---|---|
| PCB - dioxins (/kg) | of protein hydrolysate at 12% humidity | Fish and fish by-products, hydrolysate <20% MG |
| Dioxins (PCDD/F-TEQ) | 0.0566 ng | 1.25 ng |
| PCBs and dioxins (PCDD/F-PCB-TEQ) | 0.394 ng | 4.0 ng |
| PCBs other than dioxin-like PCBs | 1.29 pg | 30 pg |

The levels of PCBs and dioxins comply with the thresholds of European regulations (2017/644).

### Biogenic amines (mg/kg)

The content of biogenic amines was determined to be as follows (mg/kg of dry matter):

| | |
|---|---|
| Tyramine | 284,0 |
| Putrescine | 128.0 |
| Cadaverine | 714.0 |
| Histamine | 537.0 |
| Phenylethylamine | 10.6 |
| Spermidine | 31.8 |
| Tryptamine | 17.7 |
| Spermine | 7.1 |
| **TOTAL** | **1730.2** |

Biogenic amine levels were rather high. This was due to the poor freshness of the raw material.

| **Amino acid** | **g/100g** | **Relative % of quantified SAs** | **% AA/100g protein** |
|---|---|---|---|
| tryptophan | 0.673 | 1.1% | 0.9% |
| hydroxyproline | 1.12 | 1.8% | 1.6% |
| ornithine | <0.05 | <0.1% | 0.1% |
| cystine and cysteine | 0.526 | 0.8% | 0.7% |
| aspartic acid | 5.6 | 9.0% | 7.8% |
| proline | 3.75 | 6.1% | 5.3% |
| methionine | 1.44 | 2.3% | 2.0% |
| threonine | 2.84 | 4.6% | 4.0% |
| serine | 2.71 | 4.4% | 3.8% |
| glutamic acid | 8.01 | 12.9% | 11.2% |
| glycine | 5.97 | 9.6% | 8.4% |
| alanine | 4.62 | 7.5% | 6.5% |
| valine | 3.03 | 4.9% | 4.2% |
| isoleucine | 2.4 | 3.9% | 3.4% |
| leucine | 4.51 | 7.3% | 6.3% |
| phenylalanine | 2.39 | 3.9% | 3.3% |
| lysine | 4.67 | 7.5% | 6.5% |
| histidine | 2.36 | 3.8% | 3.3% |
| arginine | 3.54 | 5.7% | 5.0% |
| tyrosine | 1.82 | 2.9% | 2.5% |
| TOTAL AA quantified | 61.98 | 100.0% | 86.8% |

The main amino acid in the protein hydrolysate is glutamic acid (13%), followed by glycine (9.6%) and aspartic acid (9%).

### Fatty acid profile

| | Content (g/100g) | Content (g/100g hydrolysate) |
|---|---|---|
| Saturated fatty acids | 31.92 | 3.4 |
| Monounsaturated fatty acids | 28.34 | 3.0 |
| Polyunsaturated fatty acids | 37.99 | 4.1 |
| Omega 3 | 31.00 | 3.3 |

31% of fatty acids (11.2%) is omega 3. Per 100g of protein hydrolysate, 4,1 grams of polyunsaturated fatty acids are present. The detailed fatty acid profile is given in the appendix (batch 2).

### Characteristics of collagen hydrolysates (powder)

### Nutritional composition

| | **Collagen hydrolysate batch 1** | **Collagen hydrolysate batch 2** |
|---|---|---|
| Available quantity | 19 kg | 14 kg |
| Humidity | 3,4% | 3.0% |
| Proteins | 86.0% | 85.4% |
| Proteins/dry weight | 89.0% | 88,0% |
| Minerals | 14,0% | 11,60% |
| Minerals/dry weight | 14,5% | 12,0% |

The obtained collagen hydrolysate contains 88% protein on dry basis and 12% minerals.

After nanofiltration, one can expect a mineral content reduced to about 2-3% of the dry matter and a protein content >97% since this was what had been obtained on the sample that was filtered.

### Amino acid profile

| | **Collagen batch 1** | | | **Collagen batch 2** | | |
|---|---|---|---|---|---|---|
| Amino acids | g/100g hydrolysate | Relative % of Quantified SAs | % AA/100g proteins | g/100g of hydrolysate | Relative % of Quantified SAs | % AA/100g proteins |
| hydroxyproline | 5.69 | 7.75% | 6.62% | 5.26 | 6.92% | 6.16% |
| cystine | 0.26 | 0.35% | 0.30% | 0.30 | 0.39% | 0.35% |
| aspartic acid | 4.98 | 6.78% | 5.79% | 5.25 | 6.91% | 6.15% |
| proline | 6.3 | 8.58% | 7.33% | 6.39 | 8,41% | 7.48% |
| methionine | 1.49 | 2.03% | 1.73% | 1.73 | 2.28% | 2.03% |
| threonine | 2.63 | 3.58% | 3.06% | 2.79 | 3.67% | 3.27% |
| serine | 2.85 | 3.88% | 3.31% | 3.02 | 3.98% | 3.54% |
| glutamic acid | 8.66 | 11.80% | 10.07% | 8.99 | 11.83% | 10.53% |
| glycine | 14.97 | 20.40% | 17.41% | 14.90 | 19.61% | 17.45% |
| alanine | 7.11 | 9.69% | 8.27% | 7.43 | 9.78% | 8.70% |
| valine | 2.43 | 3.31% | 2.83% | 2.75 | 3.62% | 3.22% |
| isoleucine | 1.51 | 2.06% | 1.76% | 1.74 | 2.29% | 2.04% |
| leucine | 3.13 | 4.26% | 3.64% | 3.47 | 4.57% | 4.06% |
| phenylalanine | 1.75 | 2.38% | 2.03% | 2.02 | 2.66% | 2.37% |
| lysine | 3.29 | 4.48% | 3.83% | 3.45 | 4.54% | 4.04% |
| histidine | 0.91 | 1.24% | 1.06% | 0.90 | 1.18% | 1.05% |
| arginine | 5.44 | 7.41% | 6.33% | 5.58 | 7.35% | 6.53% |
| TOTAL AA quantified | 73.4 | 100.00% | 85.35% | 75.97 | 100.00% | 88.96% |

The hydroxyproline content obtained was slightly lower than the average of a marine collagen (8-8.5%). The glycine content is in line with the standard and the proline content is slightly low. The type of raw material and the parameters of the flesh/cartilage separation therefore are important points for the purity of collagen.

### Quality

| | **Collagen batch 1** | **Collagen batch 2** |
|---|---|---|
| Coliforms 30°C | <10 | <10 |
| Enterococci | <10 | <10 |
| Salmonellae | Absent in 25g | |
| Yeasts and fungi | 600 | <10 |

| **Biogenic amines (mg/kg)** | **Collagen batch 1** | **Collagen batch 2** |
|---|---|---|
| Tyramine | 30.6 | 21.8 |
| Putrescine | 83.2 | 87.4 |
| Cadaverine | 332.2 | 259.4 |
| Histamine | 56.3 | 75.6 |
| Phenylethylamine | <5.0 | <5.0 |
| Spermidine | <5.0 | <5.0 |
| Tryptamine | <5.0 | <5.0 |
| Spermine | <5.0 | <5.0 |
| Serotonin | <5.0 | <5.0 |
| **TOTAL** | **502.3** | **444.2** |

### Molecular weight profiles

The estimation of the protein size of the samples was done by HPLC analysis. The sample is diluted in a suitable buffer and analysed through a filtration gel column which allows the molecules to be sorted according to their size: during the analysis, the largest molecules come out first from the column, the smallest last. A detector set at 214 nm is used to detect protein compounds.

The use of standard proteins allows the column to be calibrated. The table below shows the correspondence between retention time in the column and the size of the proteins/peptides of the collagen hydrolysates and the protein hydrolysates produced:

| **approximate MW** | **Collagen A** | **Collagen B** |
|---|---|---|
| > 300 kDa | 0.28 | 0.24 |
| 100-300 kDa | 0.02 | 0.01 |
| 50 -100 kDa | 0.01 | 0 |
| 10-50 kDa | 1.49 | 0.2 |
| 2 -10 kDa | 31.70 | 32.67 |
| 0.5 - 2 kDa | 50.53 | 48.94 |
| < 0.5 kDa | 15.96 | 17.95 |

The hydrolysed collagen contains about 67% peptides < 2kDa. The hydrolysed protein batches (CPSP1 to CPSP3) contain about 66 to 70% of peptides <2kDa. The profiles are quite similar for the 2 batches, the batch 1 seems slightly more hydrolysed.

### Conclusion

The above examples show that protein hydrolysate and collagen hydrolysate can be efficiently produced and purified by including ultrafiltration and nanofiltration steps in order to achieve well defined peptide distributions, low salt concentrations and otherwise good sensory properties. The fact that the initial raw material was slightly degraded due to insufficient or deficient preservation led to a relatively high content of biogenic amines. This problem will not occur, with properly conserved raw material. Nevertheless, even on the basis of sub-optimal raw material, the composition of the hydrolysates was satisfactory.

The examples show that the demineralisation by nanofiltration has been effective with acceptable permeate flows. Furthermore, it was possible to obtain a collagen with a low odour and partially discoloured, despite of the low quality raw material.

### Matrikines:

Without being bound to a theory, MMPs (Matrix metalloproteinases) are crucial for the generation of matrikines from ECM (extra cellular matrix) collagen components. Collagen products therefore are expected to contain these valuable components. Exemplary matrikines are arresten, canstatin, tumstatin, tetrastatin, pentastatin 1, pentastatin 2, pentastatin 3, lamstatin, hexastatin 1, hexastatin 2, NC1 domain of collagen IV or XIX, endotropin, ectodomain of collagen XIII, XVII, XXIII or XXV, restin 1, restin 2, restin 3, restin 4, endostatin, neostatin 7, neostatin 14, palmitoyl pentapeptide-4, collagen hexapeptide GFOGER, and CLAC.

**Annex**

| | | |
|---|---|---|
| C4:0 Ac. butyrique | <0.05 | % |
| C6:0 Ac. caproique | <0.05 | % |
| C7:0 Ac. enanthique | <0.05 | % |
| C8:0 Ac. caprylique | 0.15 | (± *0.37) %* |
| C9:0 Ac. pelargonique | <0.05 | % |
| C10:0 Ac. caprique | 0.07 | (± *0.33) %* |
| C11:0 Ac. undecylique | <0.05 | % |
| C11:1 Ac. undecylenique | <0.05 | % |
| C12:0 Ac. laurique | 0.85 | (± *0.54) %* |
| C12:1 Ac. lauroleique | <0.05 | % |
| C13:0 Ac. tridecylique | <0.05 | % |
| C13:1 Ac. tridecylenique | <0.05 | % |
| C14:0 Ac. myristique | 3.17 | (± *0.81) %* |
| C14:1 (n-5c) Ac. myristoleique | 0.09 | (± *0.34) %* |
| C14:1 (n-5t) Ac. myristoleique | <0.05 | % |
| C15:0 Ac. pentadecylique | 0.86 | (± *0.54) %* |
| C15:1 (n-5c) Ac. pentadecenoique | <0.05 | % |
| C15:1 (n-5t) Ac. pentadecenoique | <0.05 | % |
| C16:0 Ac. palmitique | 18.69 | (± 1.62) % |
| C16:1 (n-7c) Ac. palmitoleique | 3.67 | (± *0.86) %* |
| C16:1 (n-7t) Ac. palmitelaidique | <0.05 | % |
| C17:0 Ac. margarique | 1.07 | (± *0.58) %* |
| C17:1 (n-7c) Ac. heptadecenoique | <0.05 | % |
| C17:1 (n-7t) Ac. heptadecenoique | <0.05 | % |
| C18:0 Ac. stearique | 5.99 | (± *1.02) %* |
| C18:1 (n-6c) | <0.05 | % |
| C18:1 (n-7c) Ac. vaccenique | 2.30 | (± *0.73) %* |
| C18:1 (n-7t) Ac. transvaccenique | <0.05 | % |
| C18:1 (n-9c) Ac. oleique | 19.79 | (± 1.66) % |
| C18:1 (n-9t) + C18:1 (n-12t) | 0.15 | (± *0.37) %* |
| C18:2 (9c,11t) Ac. linoleique conjugue | <0.05 | % |
| C18:2 (n-6c) Ac. linoleique (LA) ω6 | 2.97 | (± *0.79) %* |
| C18:2 (n-6t) Ac. linolelaidique | <0.05 | % |
| C18:2 t2 | <0.05 | % |
| C18:3 (n-3) Ac. α-linolenique (ALA) ω3 | 0.87 | (± *0.54) %* |
| C18:3 (n-6) Ac. γ-linolenique (GLA) ω6 | <0.05 | % |
| C18:3 t3 (C18:3 t1+C18:3 t2) | <0.05 | % |
| C18:4 (n-3) Ac. moroctique ω3 | <0.05 | % |
| C19:0 Ac. nonadecylique | 0.21 | (± *0.39) %* |
| C19:1 (n-12t) | <0.05 | % |
| C19:1 (n-9t) | 0.62 | (± *0.50) %* |
| C20:0 Ac. arachidique | 0.37 | (± *0.44) %* |
| C20:1 (n-9c) Ac. gondoique | 1.32 | (± *0.61) %* |
| C20:1 (n-9t) + C18:2 (10t,12c) + C20:1 (n-15c) | 0.50 | (± *0.47) %* |
| C20:2 (n-6c) Ac. eicosodienoique | 0.27 | (± *0.41) %* |
| C20:3 (n-3c) Ac. eicosatrienoique | 0.20 | (± *0.39) %* |
| C20:3 (n-6c) Ac. Eicosatrienoique (DHGLA) | <0.05 | % |
| C20:4 (n-6c) Ac. arachidonique (AA) ω6 | 1.69 | (± *0.66) %* |
| C20:5 (n-3c) Ac. eicosapentaenoique (EPA) ω3 | 5.27 | (± *0.98) %* |
| C21:0 Ac. heneicosanoique | <0.05 | % |
| C22:0 Ac. behenique | 0.29 | (± *0.42) %* |
| C22:1 (n-11) Ac. cetoleique | 0.26 | (± *0.41) %* |
| C22:1 (n-9c) Ac. erucique | 0.21 | (± *0.39)* % . |
| C22:1 (n-9t) Ac. brassidique | 0.50 | (± *0.47) %* |
| C22:2 (n-6c) Ac. docosadienoique | <0.05 | % |
| C22:3 (n-3c) + C22:4 (n-6c) | 0.26 | (± *0.41) %* |
| C22:5 (n-3c) Ac. Docosapentaenoique (DPA) ω3 | 1.38 | (± *0.62) %* |
| C22:5 (n-6c) Ac. docosapentaenoique ω6 | 1.60 | (± *0.65) %* |
| C22:6 (n-3c) Ac. docosahexaenoique (DHA) ω3 | 23.48 | (± 1.78) % |
| C24:0 Ac. lignocerique | 0.20 | (± *0.39) %* |
| C24:1 Ac. nervonique | 0.70 | (± *0.51) %* |
| C4:0 Ac. butyrique sur p.fini | <0.01 | g/100 g |
| C6:0 Ac. caproique sur p.fini | <0.01 | g/100 g |
| C7:0 Ac. enanthique sur p.fini | <0.01 | g/100 g |
| C8:0 Ac. caprylique sur p.fini | 0.02 | (± *0.09)* g/100 g |
| C9:0 Ac. pelargonique sur p.fini | <0.01 | g/100 g |
| C10:0 Ac. caprique sur p.fini | <0.01 | g/100 g |
| C11:0 Ac. undecylique sur p.fini | <0.01 | g/100 g |
| C11:1 Ac. undecylenique sur p.fini | <0.01 | g/100 g |
| C12:0 Ac. laurique sur p.fini | 0.09 | (± *0.14)* g/100 g |
| C12:1 Ac. lauroleique sur p.fini | <0.01 | g/100 g |
| C13:0 Ac. tridecylique sur p.fini | <0.01 | g/100 g |
| C13:1 Ac. tridecylenique sur p.fini | <0.01 | g/100 g |
| C14:0 Ac. myristique sur p.fini | 0.34 | (± 0.23) g/100 g |
| C14:1 (n-5c) Ac. myristoleique sur p.fini | <0.01 | g/100 g |
| C14:1 (n-5t) Ac. myristoleique sur p.fini | <0.01 | g/100 g |
| C15:0 Ac. pentadecylique sur p.fini | 0.09 | (± *0.14)* g/100 g |
| C15:1 (n-5c) Ac. pentadecenoique sur p.fini | <0.01 | g/100 g |
| C15:1 (n-5t) Ac. pentadecenoique sur p.fini | <0.01 | g/100 g |
| C16:0 Ac. palmitique sur p.fini | 2.00 | (± *0.50)* g/100g |
| C16:1 (n-7c) Ac. palmitoleique sur p.fini | 0.39 | (± 0.25) g/100g |
| C16:1 (n-7t) Ac. palmitelaidique sur p.fini | <0.01 | g/100 g |
| C17:0 Ac. margarique sur p.fini | 0.11 | (± *0.15)* g/100 g |
| C17:1 (n-7c) Ac. heptadecenoique sur p.fini | <0.01 | g/100 g |
| C17:1 (n-7t) Ac heptadecenoique sur p.fini | <0.01 | g/100 g |
| C18:0 Ac. stearique sur p.fini | 0.64 | *(± 0.30)* g/100 g |
| C18:1 (n-6c) sur p.fini | <0.01 | g/100 g |
| C18:1 (n-7c) Ac. vaccenique sur p.fini | 0.25 | (± 0.21) g/100 g |
| C18:1 (n-7t) Ac. transvaccenique sur p.fini | <0.01 | g/100 g |
| C18:1 (n-9) Ac. oleique sur p.fini | 2.12 | (± *0.51)* g/100 g |
| C18:1 (n-9t)+C18:1 (n-12t) sur p.fini | 0.02 | (± *0.09)* g/100 g |
| C18:2 (9c,11t) Ac. linoleique conjugue sur p.fini | <0.01 | g/100 g |
| C18:2 (n-6c) Ac. linoleique (LA) ω6 sur p.fini | 0.32 | (± 0.23) g/100 g |
| C18:2 (n-6t) Ac. linolelaidique sur p.fini | <0.01 | g/100 g |
| C18:2 t2 sur p.fini | <0.01 | g/100 g |
| C18:3 (n-3) Ac. α-linolenique (ALA) ω3 sur p.fini | 0.09 | (± *0.14)* g/100 g |
| C18:3 (n-6) Ac. γ-linolenique (GLA) ω6 sur p.fini | <0.01 | g/100 g |
| C18:3 t3 (C18:3 t1+C18:3 t2) sur p.fini | <0.01 | g/100 g |
| C18:4 (n-3) Ac. moroctique ω3 sur g p.fini | <0.01 | g/100 g |
| C19:0 Ac. nonadecylique sur p.fini | 0.02 | (± *0.09)* g/100 g |
| C19:1 (n-12t) sur p.fini | <0.01 | g/100 g |
| C19:1 (n-9t) sur p.fini | 0.07 | (± *0.13)* g/100 g |
| C20:0 Ac. arachidique sur p.fini | 0.04 | (± *0.11)* g/100 g |
| C20:1 (n-9c) Ac. gondoique sur p.fini | 0.14 | (± 0.17) g/100 g |
| C20:1(n-9t)+C18:2(10t,12c)+C20:1(n-15c) sur p.fini | 0.05 | (± *0.12)* g/100 g |
| C20:2 (n-6c) Ac. eicosodienoique sur p.fini | 0.03 | (± *0.10)* g/100 g |
| C20:3 (n-3c) Ac. eicosatrienoique sur p.fini | 0.02 | (± *0.09)* g/100 g |
| C20:3 (n-6c) Ac. eicosatrienoique sur g p.fini | <0.01 | g/100 |
| C20:4 (n-6c) Ac. arachidonique (AA) ω6 sur p.fini | 0.18 | (± *0.18)* g/100 g |
| C20:5 (n-3c) Ac. Eicosapentaenoique ω3 sur p.fini | 0.56 | (± 0.29) g/100 g |
| C21:0 Ac. heneicosanoique sur p.fini | <0.01 | g/100 g |
| C22:0 Ac. behenique sur p.fini | 0.03 | (± *0.10)* g/100 g |
| C22:1 (n-11) Ac. cetoleique sur p.fini | 0.03 | (± *0.10)* g/100 g |
| C22:1 (n-9c) Ac. erucique sur p.fini | 0.02 | (± *0.09)* g/100 g |
| C22:1 (n-9t) Ac. brassidique sur p.fini | 0.05 | (± *0.12)* g/100 g |
| C22:2 (n-6c) Ac. docosadienoique sur p.fini | <0.01 | g/100 g |
| C22:3 (n-3c) + C22:4 (n-6c) sur p.fini | 0.03 | (± *0.10)* g/100 g |
| C22:5 (n-3c) Ac. docosapentaenoique ω3 sur p.fini | 0.15 | (± 0.17) g/100 g |
| C22:5 (n-6c) Ac. docosapentaenoique ω6 sur p.fini | 0.17 | (± *0.18)* g/100 g |
| C22:6 (n-3c) Ac. docosahexaenoique ω3 sur p.fini | 2.51 | (± *0.55)* g/100 g |
| C24:0 Ac. lignocerique sur p.fini | 0.02 | (± *0.09)* g/100 g |
| C24:1 Ac. nervonique sur p.fini | 0.07 | (± *0.13)* g/100 g |

## Claims

1. A method of extracting collagen from marine animal by-products, the method comprising the steps of:
a) providing marine animal by-product pieces, wherein the by-product pieces comprise at least two components selected from flesh, skin, fish bones, fins and cartilage of the marine animal,
b) separating the animal by-product pieces into at least two fractions comprising a protein-rich fraction and a fraction comprising skin and cartilage, wherein the skin and cartilage fraction is essentially free of flesh,
c) optionally, grinding the fraction comprising skin and cartilage, preferably to a resulting particle size of between 0,5 mm and 1 cm, more preferably between 1 mm and 4 mm,
d) enzymatically hydrolyzing the fraction comprising skin and cartilage to produce a collagen raw hydrolysate, preferably the hydrolysis is carried out at a pH of between 5 and 9,
e) separate the collagen raw hydrolysate into a lipid fraction, an aqueous collagen hydrolysate fraction without solids and a fraction with solids, preferably the separation is done by three phase decanter centrifugation,
f) subjecting the aqueous collagen hydrolysate fraction to at least one filtration step, using a membrane with a pore size of 2000 - 100.000 Da, preferably 4000 to 50.000 Da, more preferably about 10.000 Da, to produce a first permeate containing collagen hydrolysate and a retentate, and
g) demineralizing the first permeate by nanofiltration and/or dialysis using a membrane with a pore size of less than 1000 Da, preferably between about 150-300 Da to produce purified collagen solution.

2. The method of claim 1, further comprising deodorizing the purified collagen solution of step g), preferably the deodorizing is performed using activated carbon and/or dialysis.

3. The method of claims 1 or 2, further comprising concentrating and sterilizing the purified collagen solution or the deodorized purified collagen solution, preferably the concentration and sterilization is performed by evaporation such as direct steam injection.

4. The method of any one of claims 1 to 3, further comprising drying the purified collagen solution or the purified deodorized collagen solution, or the concentrates thereof, to produce collagen powder, preferably the drying is performed by spray drying, freeze drying, lyophilizing, nozzle atomizer, most preferably the drying is performed by continuous horizontal spray drying.

5. A method of producing protein hydrolysate from marine animal by-products, the method comprising the steps of:
a) providing marine animal by-product pieces, wherein the by-product pieces comprise at least two components selected from flesh, skin, fish bones, fins and cartilage of the marine animal,
b) separating the by-product pieces into at least two fractions comprising a protein-rich fraction and a fraction comprising skin and cartilage,
c) mixing the protein-rich fraction with water and separating a lipid fraction, an aqueous fraction and a protein-rich solid fraction, preferably the separation is done by three phase decanter centrifugation,
d) enzymatically hydrolyzing the protein-rich solid fraction to produce a protein hydrolysate solution,
e) separating the protein hydrolysate solution into a second lipid fraction, an aqueous protein hydrolysate fraction and a second solid fraction, preferably by three phase decanter centrifugation, and
f) collecting the aqueous protein hydrolysate.

6. The method of claim 5, further comprising:
g) demineralizing the aqueous protein hydrolysate of step f) by filtration and/or dialysis using a membrane with a pore size of less than 1000 Da, preferably between 100 and 500 Da.

7. The method of claim 5 or 6, further comprising concentrating and sterilizing the aqueous protein hydrolysate or the demineralized aqueous protein hydrolysate, preferably the concentration and sterilization is performed by evaporation, such as direct steam injection.

8. The method of any one of claims 5 to 7, further comprising drying the aqueous protein hydrolysate, the demineralized aqueous protein hydrolysate or the respective concentrate thereof, to produce protein powder, preferably the drying is performed by spray drying, freeze drying, lyophilizing, nozzle atomizer, most preferably the drying is performed by continuous horizontal spray drying.

9. The method of any one of claims 5 to 8, further comprising:
c') collecting the aqueous fraction of step c) and subjecting it to filtration and/or dialysis using a membrane with a pore size of less than 1000 Da, preferably between 100 and 500 Da,
c") adding the retentate of step c') to the protein-rich solid fraction prior to step d).

10. An integrated process of up-cycling marine animal by-products, comprising
a) providing marine animal by-product pieces, wherein the by-product pieces comprise at least two components selected from flesh, skin, fish bones, fins and cartilage of the marine animal,
b) separate the by-product pieces into at least two fractions comprising a protein-rich fraction and a fraction comprising skin and cartilage, wherein the skin and cartilage fraction is essentially free of flesh,
c1) subjecting the protein-rich fraction to steps c) and subsequent steps of any one of claims 5 to 9, and
c2) subjecting the fraction comprising skin and cartilage to steps c) and subsequent steps of any one of claims 1-4.

11. The method of any one of claims 1 to 10, wherein the marine animal by-product is a by-product of fish, such as heads, viscera, fish bones, scraps and/or skin, preferably the marine by-product is a by-product of tuna.

12. A collagen solution or a collagen powder produced by the method of any one of claims 1 to 4, 10 or 11, wherein at least 50% of the peptides of the hydrolysate or powder are < 2kDa, preferably at least about 60% of the peptides are < 2 kDa, more preferably at least about 65% of the peptides are < 2 kDa and wherein the residual salt content is less than 4%, preferably less than 2% or less than 1% by dry weight, and wherein the collagen solution or collagen powder contains less than 1%, preferably essentially no peptides larger than 35 kDa and less than 5%, preferably less than 2% and more preferably essentially no peptides larger than 10 kDa.

13. A protein hydrolysate or protein powder produced by the method of any one of claims 5 to 11, wherein the hydrolysate or powder comprises at least 3% (wt) of omega 3 lipids and at least 1 % (wt) of phospholipids, preferably the hydrolysate or powder comprises at least 2% (wt) of monosaturated lipids, at least 3% (wt) of polysaturated lipids and at least 2,5% (wt) of omega 3 lipids, and has a protein content of between 70-80% of protein, a total lipid content of about 11-19% with about 2-5% phospholipids and a total mineral (ashes) content of about 6-10% with about 2-4% chloride at a residual moisture content of about 2-4%, and wherein the protein hydrolysate or protein powder has residual salt content of less than 10%, preferably less than 5% by dry weight, the lipid content is less than 15%, preferably less than 12% or 10% by dry weight and the protein content is more than 70%, preferably more than 75% or 80% by dry weight.

14. The protein hydrolysate or protein powder of claim 13, which contains less than 4%, preferably less than 3 or 2% peptides larger than 35 kDa and less than 5%, preferably less than 4% and more preferably less than 3% peptides larger than 10 kDa.

## Patentansprüche

1. Ein Verfahren zur Extraktion von Kollagen aus Nebenprodukten von Meerestieren, wobei das Verfahren die folgenden Schritte umfasst:
a) Bereitstellen von Stücken von Nebenprodukten von Meerestieren, wobei die Nebenproduktstücke mindestens zwei Komponenten umfassen, die aus Fleisch, Haut, Fischgräten, Flossen und Knorpel des Meerestiers ausgewählt sind,
b) Auftrennen der tierischen Nebenproduktstücke in mindestens zwei Fraktionen, die eine proteinreiche Fraktion und eine Haut und Knorpel umfassende Fraktion umfassen, wobei die Haut- und Knorpelfraktion im Wesentlichen frei von Fleisch ist,
c) gegebenenfalls Zerkleinern der Haut und Knorpel umfassenden Fraktion, vorzugsweise auf eine resultierende Teilchengröße zwischen 0,5 mm und 1 cm, bevorzugter zwischen 1 mm und 4 mm,
d) enzymatische Hydrolyse der Haut und Knorpel umfassenden Fraktion zur Herstellung eines Kollagenrohhydrolysats, wobei die Hydrolyse vorzugsweise bei einem pH-Wert zwischen 5 und 9 durchgeführt wird,
e) Auftrennung des Kollagenrohhydrolysats in eine Lipidfraktion, eine wässrige Kollagenhydrolysatfraktion ohne Feststoffe und eine Fraktion mit Feststoffen, wobei die Auftrennung vorzugsweise durch Dreiphasendekanterzentrifugation erfolgt,
f) Unterziehen der wässrigen Kollagenhydrolysatfraktion mindestens einem Filtrationsschritt unter Verwendung einer Membran mit einer Porengröße von 2000-100.000 Da, vorzugsweise 4000-50.000 Da, stärker bevorzugt etwa 10.000 Da, um ein erstes Permeat, das Kollagenhydrolysat enthält, und ein Retentat herzustellen, und
g) Demineralisieren des ersten Permeats durch Nanofiltration und/oder Dialyse unter Verwendung einer Membran mit einer Porengröße von weniger als 1000 Da, vorzugsweise zwischen etwa 150 und 300 Da, um eine gereinigte Kollagenlösung herzustellen.

2. Das Verfahren nach Anspruch 1, das ferner das Desodorieren der gereinigten Kollagenlösung aus Schritt g) umfasst, wobei das Desodorieren vorzugsweise unter Verwendung von Aktivkohle und/oder Dialyse durchgeführt wird.

3. Das Verfahren nach Anspruch 1 oder 2, das ferner das Konzentrieren und Sterilisieren der gereinigten Kollagenlösung oder der desodorierten gereinigten Kollagenlösung umfasst, wobei die Konzentration und Sterilisation vorzugsweise durch Verdampfung, wie z. B. direkte Dampfinjektion, durchgeführt wird.

4. Das Verfahren nach einem der Ansprüche 1 bis 3, das ferner das Trocknen der gereinigten Kollagenlösung oder der gereinigten desodorierten Kollagenlösung oder der Konzentrate davon umfasst, um Kollagenpulver herzustellen, wobei das Trocknen vorzugsweise durch Sprühtrocknen, Gefriertrocknen, Lyophilisieren, Düsenzerstäuben durchgeführt wird, wobei das Trocknen am meisten bevorzugt durch kontinuierliches horizontales Sprühtrocknen durchgeführt wird.

5. Ein Verfahren zur Herstellung von Proteinhydrolysat aus Nebenprodukten von Meerestieren, wobei das Verfahren die folgenden Schritte umfasst:
a) Bereitstellen von Stücken von Nebenprodukten von Meerestieren, wobei die Nebenproduktstücke mindestens zwei Komponenten umfassen, die aus Fleisch, Haut, Fischgräten, Flossen und Knorpel des Meerestiers ausgewählt sind,
b) Auftrennen der Nebenproduktstücke in mindestens zwei Fraktionen, die eine proteinreiche Fraktion und eine Haut und Knorpel umfassende Fraktion umfassen,
c) Mischen der proteinreichen Fraktion mit Wasser und Abtrennen einer Lipidfraktion, einer wässrigen Fraktion und einer proteinreichen Feststofffraktion, wobei die Trennung vorzugsweise durch Dreiphasendekanterzentrifugation erfolgt,
d) enzymatische Hydrolyse der proteinreichen Feststofffraktion zur Herstellung einer Proteinhydrolysatlösung,
e) Auftrennung der Proteinhydrolysatlösung in eine zweite Lipidfraktion, eine wässrige Proteinhydrolysatfraktion und eine zweite Feststofffraktion, vorzugsweise durch Dreiphasendekanterzentrifugation, und
f) Gewinnung des wässrigen Proteinhydrolysats.

6. Das Verfahren nach Anspruch 5, das ferner Folgendes umfasst:
g) Demineralisieren des wässrigen Proteinhydrolysats aus Schritt f) durch Filtration und/oder Dialyse unter Verwendung einer Membran mit einer Porengröße von weniger als 1000 Da, vorzugsweise zwischen 100 und 500 Da.

7. Das Verfahren nach Anspruch 5 oder 6, das ferner das Konzentrieren und Sterilisieren des wässrigen Proteinhydrolysats oder des demineralisierten wässrigen Proteinhydrolysats umfasst, wobei die Konzentration und Sterilisation vorzugsweise durch Verdampfung, wie z. B. direkte Dampfinjektion, durchgeführt wird.

8. Das Verfahren nach einem der Ansprüche 5 bis 7, das ferner das Trocknen des wässrigen Proteinhydrolysats, des demineralisierten wässrigen Proteinhydrolysats oder des jeweiligen Konzentrats davon umfasst, um Proteinpulver herzustellen, wobei das Trocknen vorzugsweise durch Sprühtrocknung, Gefriertrocknung, Lyophilisierung, Düsenzerstäubung erfolgt, wobei das Trocknen am meisten bevorzugt durch kontinuierliche horizontale Sprühtrocknung erfolgt.

9. Das Verfahren nach einem der Ansprüche 5 bis 8, das ferner Folgendes umfasst:
c') Sammeln der wässrigen Fraktion von Schritt c) und Unterziehen derselben einer Filtration und/oder Dialyse unter Verwendung einer Membran mit einer Porengröße von weniger als 1000 Da, vorzugsweise zwischen 100 und 500 Da,
c") Zugeben des Retentats von Schritt c') zu der proteinreichen Feststofffraktion vor Schritt d).

10. Integriertes Verfahren zur Aufwertung von Nebenprodukten von Meerestieren, umfassend
a) Bereitstellen von Stücken von Nebenprodukten von Meerestieren, wobei die Nebenproduktstücke mindestens zwei Komponenten umfassen, die aus Fleisch, Haut, Gräten, Flossen und Knorpel des Meerestiers ausgewählt sind,
b) Auftrennen der Nebenproduktstücke in mindestens zwei Fraktionen, die eine proteinreiche Fraktion und eine Haut und Knorpel umfassende Fraktion umfassen, wobei die Haut- und Knorpelfraktion im Wesentlichen frei von Fleisch ist,
c1) Durchführen der Schritte c) und der nachfolgenden Schritte nach einem der Ansprüche 5 bis 9 mit der proteinreichen Fraktion und
c2) Durchführen der Schritte c) und der nachfolgenden Schritte nach einem der Ansprüche 1 bis 4 mit der Haut und Knorpel umfassenden Fraktion.

11. Das Verfahren nach einem der Ansprüche 1 bis 10, wobei das Nebenprodukt von Meerestieren ein Nebenprodukt von Fisch ist, wie z. B. Köpfe, Eingeweide, Gräten, Abfälle und/oder Haut, wobei das Nebenprodukt von Meerestieren vorzugsweise ein Nebenprodukt von Thunfisch ist.

12. Eine Kollagenlösung oder ein Kollagenpulver, hergestellt durch das Verfahren nach einem der Ansprüche 1 bis 4, 10 oder 11, wobei mindestens 50 % der Peptide des Hydrolysats oder Pulvers < 2 kDa sind, vorzugsweise mindestens etwa 60 % der Peptide < 2 kDa sind, stärker bevorzugt mindestens etwa 65 % der Peptide < 2 kDa sind und wobei der Restsalzgehalt weniger als 4 %, vorzugsweise weniger als 2 % oder weniger als 1 % bezogen auf das Trockengewicht ist, und wobei die Kollagenlösung oder das Kollagenpulver weniger als 1 %, vorzugsweise im Wesentlichen keine Peptide größer als 35 kDa und weniger als 5 %, vorzugsweise weniger als 2 % und stärker bevorzugt im Wesentlichen keine Peptide größer als 10 kDa enthält.

13. Ein Proteinhydrolysat oder Proteinpulver, hergestellt durch das Verfahren nach einem der Ansprüche 5 bis 11, wobei das Hydrolysat oder Pulver mindestens 3 Gew.-% Omega-3-Lipide und mindestens 1 Gew.-% Phospholipide umfasst, wobei das Hydrolysat oder Pulver vorzugsweise mindestens 2 Gew.-% einfach ungesättigte Lipide, mindestens 3 Gew.-% mehrfach ungesättigte Lipide und mindestens 2,5 Gew.-% Omega-3-Lipide umfasst und einen Proteingehalt zwischen 70 und 80 % Protein, einen Gesamtlipidgehalt von etwa 11 bis 19 % mit etwa 2 bis 5 % Phospholipiden und einen Gesamtmineralgehalt (Asche) von etwa 6 bis 10 % mit etwa 2 bis 4 % Chlorid bei einem Restfeuchtigkeitsgehalt von etwa 2 bis 4 % aufweist, und wobei das Proteinhydrolysat oder Proteinpulver einen Restsalzgehalt von weniger als 10 %, vorzugsweise weniger als 5 % bezogen auf das Trockengewicht, aufweist, der Lipidgehalt weniger als 15 %, vorzugsweise weniger als 12 % oder 10 % bezogen auf das Trockengewicht beträgt und der Proteingehalt mehr als 70 %, vorzugsweise mehr als 75 % oder 80 % bezogen auf das Trockengewicht beträgt.

14. Das Proteinhydrolysat oder Proteinpulver nach Anspruch 13, das weniger als 4 %, vorzugsweise weniger als 3 oder 2 %, Peptide mit mehr als 35 kDa und weniger als 5 %, vorzugsweise weniger als 4 % und stärker bevorzugt weniger als 3 %, Peptide mit mehr als 10 kDa enthält.

## Revendications

1. Procédé d'extraction de collagène de sous-produits d'animaux marins, le procédé comprenant les étapes consistant à :
a) fournir des morceaux de sous-produits d'animaux marins, dans lequel les morceaux de sous-produits comprennent au moins deux composants sélectionnés parmi la chair, la peau, les arêtes de poisson, les nageoires et le cartilage de l'animal marin,
b) séparer les morceaux de sous-produits animaux en au moins deux fractions comprenant une fraction riche en protéine et une fraction comprenant la peau et le cartilage, dans lequel la fraction de peau et de cartilage est essentiellement exempte de chair,
c) éventuellement, broyer la fraction comprenant la peau et le cartilage, préférablement jusqu'à une taille de particule résultante comprise entre 0,5 mm et 1 cm, plus préférablement entre 1 mm et 4 mm,
d) hydrolyser enzymatiquement la fraction comprenant la peau et le cartilage pour produire un hydrolysat brut de collagène, préférablement l'hydrolyse est exécutée à un pH situé entre 5 et 9,
e) séparer l'hydrolysat brut de collagène en une fraction lipide, une fraction d'hydrolysat aqueux de collagène sans matières solides et une fraction avec des matières solides, préférablement la séparation est effectuée par centrifugation à décantation en trois phases,
f) soumettre la fraction d'hydrolysat aqueux de collagène à au moins une étape de filtration, en utilisant une membrane avec une taille de pore de 2 000 à 100 000 **Da,** préférablement de 4 000 à 50 000 Da, plus préférablement d'environ 10 000 Da, pour produire un premier perméat contenant l'hydrolysat de collagène et un rétentat, et
g) déminéraliser le premier perméat par nanofiltration et/ou dialyse en utilisant une membrane avec une taille de pore inférieure à 1 000 Da, préférablement entre environ 150 à 300 Da pour produire une solution de collagène purifié.

2. Procédé selon la revendication 1, comprenant en outre la désodorisation de la solution de collagène purifié de l'étape g), préférablement la désodorisation est effectuée en utilisant du charbon activé et/ou une dialyse.

3. Procédé selon les revendications 1 ou 2, comprenant en outre la concentration et la stérilisation de la solution de collagène purifié ou de la solution de collagène purifié désodorisée, préférablement la concentration et la stérilisation sont effectuées par évaporation telle que par injection directe de vapeur.

4. Procédé selon l'une quelconque des revendications 1 à 3, comprenant en outre le séchage de la solution de collagène purifié ou de la solution de collagène purifié désodorisée, ou les concentrats de celles-ci, pour produire une poudre de collagène, préférablement le séchage est effectué par séchage par pulvérisation, séchage par congélation, lyophilisation, atomisation par buse, de manière préférée entre toutes le séchage est effectué par séchage par pulvérisation horizontal continu.

5. Procédé de production d'un hydrolysat de protéine à partir de sous-produits d'animaux marins, le procédé comprenant les étapes consistant à :
a) fournir des morceaux de sous-produits d'animaux marins, dans lequel les morceaux de sous-produits comprennent au moins deux composants sélectionnés parmi la chair, la peau, les arêtes de poisson, les nageoires et le cartilage de l'animal marin,
b) séparer les morceaux de sous-produits en au moins deux fractions comprenant une fraction riche en protéine et une fraction comprenant la peau et le cartilage,
c) mélanger la fraction riche en protéine avec de l'eau et séparer une fraction lipide, une fraction aqueuse et une fraction solide riche en protéine, préférablement la séparation est effectuée par centrifugation à décantation en trois phases,
d) hydrolyser enzymatiquement la fraction solide riche en protéine pour produire une solution d'hydrolysat de protéine,
e) séparer la solution d'hydrolysat de protéine en une seconde fraction lipide, une fraction d'hydrolysat de protéine aqueux et une seconde fraction solide, préférablement par centrifugation à décantation en trois phases, et
f) collecter l'hydrolysat de protéine aqueux.

6. Procédé selon la revendication 5, comprenant en outre l'étape consistant à :
g) déminéraliser l'hydrolysat de protéine aqueux de l'étape f) par filtration et/ou dialyse en utilisant une membrane avec une taille de pore inférieure à 1 000 Da, préférablement entre 100 et 500 Da.

7. Procédé selon la revendication 5 ou 6, comprenant en outre la concentration et la stérilisation de l'hydrolysat de protéine aqueux ou de l'hydrolysat de protéine aqueux déminéralisé, préférablement la concentration et la stérilisation sont effectuées par évaporation, telle que par injection directe de vapeur.

8. Procédé selon l'une quelconque des revendications 5 à 7, comprenant en outre le séchage de l'hydrolysat de protéine aqueux, de l'hydrolysat de protéine aqueux déminéralisé ou du concentrat respectif de ceux-ci, pour produire une poudre de protéine, préférablement le séchage est effectué par séchage par pulvérisation, séchage par congélation, lyophilisation, atomisation par buse, de manière préférée entre toutes le séchage est effectué par séchage par pulvérisation horizontal continu.

9. Procédé selon l'une quelconque des revendications 5 à 8, comprenant en outre les étapes consistant à :
c') collecter la fraction aqueuse de l'étape c) et à la soumettre à une filtration et/ou une dialyse en utilisant une membrane avec une taille de pore inférieure à 1 000 Da, préférablement entre 100 et 500 Da,
c") ajouter le rétentat de l'étape c') à la fraction solide riche en protéine avant l'étape d).

10. Procédé intégré de recyclage valorisant de sous-produits d'animaux marins, comprenant les étapes consistant à
a) fournir des morceaux de sous-produits d'animaux marins, dans lequel les morceaux de sous-produits comprennent au moins deux composants sélectionnés parmi la chair, la peau, les arêtes de poisson, les nageoires et le cartilage de l'animal marin,
b) séparer les morceaux de sous-produits en au moins deux fractions comprenant une fraction riche en protéine et une fraction comprenant la peau et le cartilage, dans lequel la fraction de peau et de cartilage est essentiellement exempte de chair,
c1) soumettre la fraction riche en protéine aux étapes c) et aux étapes ultérieures selon l'une quelconque des revendications 5 à 9, et
c2) soumettre la fraction comprenant la peau et le cartilage aux étapes c) et aux étapes ultérieures selon l'une quelconque des revendications 1 à 4.

11. Procédé selon l'une quelconque des revendications 1 à 10, dans lequel le sous-produit d'animaux marins est un sous-produit de poisson, tel que des têtes, des viscères, des arêtes de poisson, des miettes et/ou de la peau, préférablement le sous-produit marin est un sous-produit de thon.

12. Solution de collagène ou poudre de collagène produite par le procédé selon l'une quelconque des revendications 1 à 4, 10 ou 11, dans laquelle au moins 50 % des peptides de l'hydrolysat ou de la poudre sont < 2 kDa, préférablement au moins environ 60 % des peptides sont < 2 kDa, plus préférablement au moins environ 65 % des peptides sont < 2 kDa et dans laquelle la teneur en sel résiduelle est inférieure à 4 %, préférablement inférieure à 2 % ou inférieure à 1 % sur poids sec, et dans laquelle la solution de collagène ou la poudre de collagène contient moins de 1 %, préférablement essentiellement aucuns peptides supérieurs à 35 kDa et inférieurs à 5 **%,** préférablement inférieurs à 2 % et plus préférablement essentiellement aucuns peptides supérieurs à 10 kDa.

13. Hydrolysat de protéine ou poudre de protéine produit·e par le procédé selon l'une quelconque des revendications 5 à 11, dans lequel·laquelle l'hydrolysat ou la poudre comprend au moins 3 % (en pds) de lipides oméga 3 et au moins 1 % (en pds) de phospholipides, préférablement l'hydrolysat ou la poudre comprend au moins 2 % (en pds) de lipides monosaturés, au moins 3 % (en pds) de lipides polysaturés et au moins 2,5 % (en pds) de lipides oméga 3, et présente une teneur en protéine comprise entre 70 à 80 % de protéine, une teneur totale en lipide d'environ 11 à 19 % avec environ 2 à 5 % de phospholipides et une teneur totale en minéraux (cendres) d'environ 6 à 10 % avec environ 2 à 4 % de chlorure à une teneur résiduelle en humidité d'environ 2 à 4 %, et dans lequel·laquelle l'hydrolysat de protéine ou la poudre de protéine présente une teneur résiduelle en sel inférieure à 10 %, préférablement inférieure à 5 % sur poids sec, la teneur en lipide est inférieure à 15 %, préférablement inférieure à 12 % ou 10 % sur poids sec et la teneur en protéine est supérieure à 70 %, préférablement supérieure à 75 % ou 80 % sur poids sec.

14. Hydrolysat de protéine ou poudre de protéine selon la revendication 13, qui contient moins de 4 %, préférablement moins de 3 ou 2 % de peptides supérieurs à 35 kDa et moins de 5 %, préférablement moins de 4 % et plus préférablement moins de 3 % de peptides supérieurs à 10 kDa.
